(19) Europäisches Patentamt
European Patent Office
Office européen des brevets

(11) Publication number: **0 411 748 A2**

(12) **EUROPEAN PATENT APPLICATION**

(21) Application number: **90305763.6**

(51) Int. Cl.5: **G06F 15/24**

(22) Date of filing: **25.05.90**

The title of the invention has been amended (Guidelines for Examination in the EPO, A-III, 7.3).

(30) Priority: **02.06.89 US 360412**

(43) Date of publication of application: **06.02.91 Bulletin 91/06**

(84) Designated Contracting States: **CH DE FR GB LI**

(71) Applicant: **REUTERS LIMITED**
**85 Fleet Street**
**London WC4P 4HA(GB)**

(72) Inventor: **Scholldorf, Alfred H.**
**354 Broadway**
**Port Jefferson Station, New York 11776(US)**

(74) Representative: **Cline, Roger Ledlie et al**
**EDWARD EVANS & CO. Chancery House**
**53-64 Chancery Laneane**
**London WC2A 1SD(GB)**

(54) **System for matching of buyers and sellers with risk minimization.**

(57) A risk control matching system for trading instrument, such as foreign exchange currencies, is provided in which bids are automaticall matched against offer for given trading instruments for automatically providing matching transactoins in order to complete trades for the given trading instruments, and broken trades are readily identified with a minimization of risk to the parties to a potential matching transaction. The system comprises a host computer (20) for maintaining a book database (118) comprising all of the active bids and offers in the system by trading instrument, a transaction originating keystation (24a) for providing a bid on a given trading insrument, a counterparty keystation (24b) for providing an offer on the given trading instrument a network (22) for interconnecting the host (20) and the kestation (24, 25b), and a plurality of transacton deks (70a, 70b, 70c), connected to the host (20) for detecting the occurrence of the potential matching transaction and "voting" on whether to commit to the match. Positive match acknowledgment signals are provided to the host (20) by the keystations (24) involved in the trade in response to receipt of match notification signals form the host (20). IKf one of these signals is not received back, the host (20) detects a broken trade to have occured. Each of the keystations (24) provides an application based heartbeat signal to the host (20) which enables rapid detection of keystation (24) failure. In the event of detection of such keystation (24) failure, the host (20) cancels all bids and offers associated with the failed keystation (24).

EP 0 411 748 A2

FIG. 1

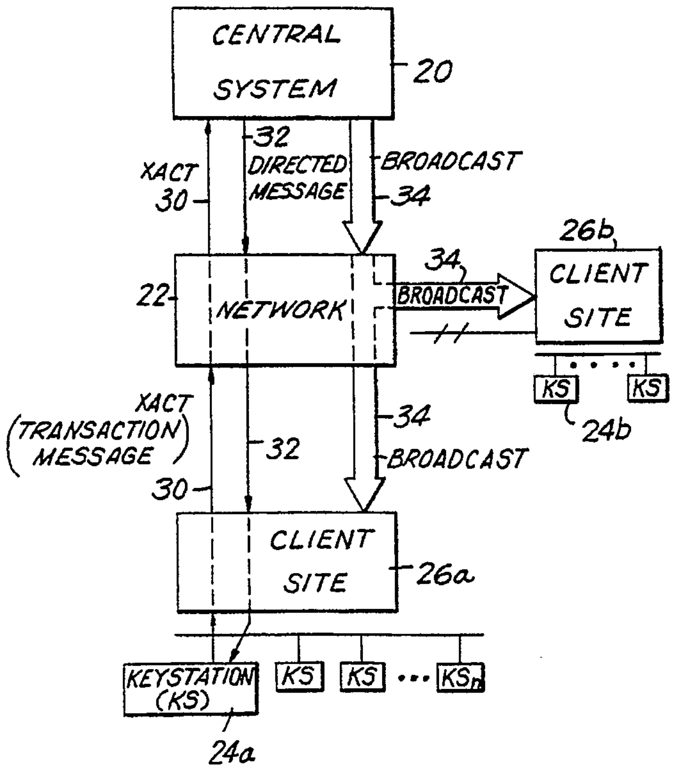
CENTRAL SYSTEM
20
32
DIRECTED MESSAGE
BROADCAST
34
XACT
30
22
NETWORK
34
BROADCAST
26b
CLIENT SITE
KS
KS
24b
XACT (TRANSACTION MESSAGE)
32
34
BROADCAST
30
CLIENT SITE
26a
KEYSTATION (KS)
KS
KS
KSn
24a

# RISK CONTROL MATCHING SYSTEM

The present invention relates to matching systems for effectuating trades of trading instruments through automatic matching in which buyers and sellers who are willing to trade with one another based on specified criteria, such as price, quantity and credit, may automatically trade when matching events occur satisfying these criteria, and more particularly to such matching systems in which risks are minimized as to losses due to broken trades.

Information retrieval systems for financial information, such as stock market type of information and money market information, normally employ a transfer of data in a high-performance, real-time information retrieval network in which update rates, retrieval rates and subscriber and/or user population are generally very high. An example of such a system is REUTERS DEALING SERVICE which is used in the foreign exchange or money market. Such systems, while providing rapid video conversation capability, are not anonymous systems nor do they provide for automated anonymous trading such as is possible in a matching system. Of course, conversational dealing systems have their place in the market and serve particular needs where appropriate. However, anonymous matching systems are also often desired and, by their very nature, do not normally employ a conversation capability since the parties to the transactions are unknown until the transaction has been completed. Examples of satisfactory prior art video conversational systems for use in connection with trading of financial information are disclosed in commonly owned US-A-4,531,184;4,525,779 and 4,404,551, by way of example. Prior art examples of matching systems used in connection with the trading of trading instruments are disclosed in US-A- 4,412,287, which discloses as an automated stock exchange in which a computer matches buy and sell orders for a variety of stocks; US-A-3,573,747, which discloses an anonymous trading system for selling fungible properties between subscribers to the system; US-A- 3,581,072, which discloses the use of a special purpose digital computer for matching orders and establishing market prices in an auction market for fungible goods; and US-A-4,674,044, which discloses an automated securities trading system. However, none of these prior art matching systems implements or suggests the use of risk controls to minimize risks as to losses due to broken trades, which are situations in which you are not entirely sure which trades have been completed or not due to network failure, or control sytem or host failure, keystation failure, all of which could result in one party thinking a trade or match had occurred while the counterparty was completely unaware of the trades. Moreover, no prior art distributed anonymous matching sytems are known to applicant in which broken trade clients are provided when there is a system failure which presents all parties to the trade from being notified of the transaction. Furthermore, no such prior art matching systems are known to application in which positive match acknowledgements are utilized in attempting to avoid broken trades. In addition, no prior art distributed matching systems are known to applicants in which directed messages are employed between the keystations in the system and the central system to update the local entry order data bases and broadcast messages are employed to update the keystation book which is a restricted subset of the host or central system book. Furthermore, none of these prior art system employ summary books at the local keystations as subsets of the host or central system book.

Although dynamic control of the content of a local receiver data base from a transmitted data base in an information retrieval communication network has been previously employed by applicants' assignee, such as disclosed in US-A- 4,745,559 and 4,750,135, these systems are, nevertheless, different from the type of risk control employed in the system of the present invention in which a plurality of isolated computers "vote" on completion of trades based on the detection of application generated "heartbeats" from the parties to the potential matched trade, and in which broken trade alerts are provided when there are systems failures during a trade which prevents all parties to the trade from being notified of the transaction. Thus, the sytem of the present invention for providing a distributed matching system in which risks are minimized as to losses due to broken trades overcomes the disadvantages of the prior art.

According to the present invention, there is provided a risk control matching system for trading instruments, such as foreign exchange currencies, is provided in which bids are automatically matched against offers for given trading instruments for automatically providing matching transactions in order to complete trades for the given trading instruments, and broken trades are readily identified with a minimization of risk to the parties to a potential matching transaction. The system comprises a host computer for maintaining a host book database comprising all the active bids and offers in the system by trading instrument, a transaction originating keystation for providing a bid on a given trading instrument to the system for providing the potential matching transaction, a counterparty keystation for providing an offer on the given trading instrument involved in the potential matching transaction, a network for interconnecting the host computer, the transaction originating keystation and the counterparty keystation in the system for enabling data communications therebetween, and a plurality, such as two or three, of matching transaction detecting means connected to the host computer for detecting the occurrence of the potential matching transaction by the host computer. Each of the transaction detecting means has an associated database for storing data with respect to the potential matching transaction. The host computer further comprises means for processing the potential matching transactions for a given trading instrument for providing a transaction detecting means. The transaction detecting means, such as a plurality of isolated computers, at least one of which is at a site remote from the o there and at least two of which are relatively close to each other, each comprise means responsive to the match indication signal for detecting the occurrence of the potential matching transaction at the host computer, and further comprise means for providing an acknowledgment signal back to the host computer in response to receipt of a predetermined plurality of these acknowledgment signals, or "votes", such as two of three, for updating the host back database based on the matching transaction and for providing a directed message tot he transaction originating keystation and the counterparty keystations acknowledging the occurrence of the matching transaction. Thus, the requirement for the various exchange of signals minimize risks as to losses due to broken trades.

In order to minimize such risks due to keystation failure, positive match acknowledgment signals are provided to the host computer by the respective keystations involved in the trade in response to receipt of match notification signals from the host computer. If one of the match acknowledgment signals is not received back, the host detects a broken trade to have occurred. Moreover, each of the keystations in the system provides an application based heartbeat signal, such as message data or a no data heartbeat message, to the host computer, in a predetermined detection interval, which enables copied detection of keystation failure. In the event of detection of such keystation failure, the host computer cancels all bids and offers associated with the failed keystation. The heartbeat detection interval is preferably set at a value high enough to mask transients but still low enough to minimize system vulnerability to broken trades, such as an eight second detection time. Thus, there are in reality at least three parties to every trade which must be "present" moreover to minimize the risks as to broken trader; namely, a buyer keystation, a seller keystation, and the central system and they should all have the scenic view of the trade, or at the very least, a permanent record of the trade should be maintained and notification of the trade should be communicated to all of the parties to the trade.

An example of the invention will now be described with reference to the accompanying drawings in which:

FIG. 1 is an overall system functional block diagram of the distributed risk control matching system of the present invention;

FIG. 2 is a functional block diagram of the system of FIG. 1 illustrating the flow of information in connection with the entry of a bid and the entry of an offer in the distributed risk control matching system of FIG. 1;

FIG. 3 is a functional block diagram similar to FIG. 2 of the flow of information in the distributed risk control matching system of the present invention in connection with a hit bid or trade;

FIG. 4 is an illustrative diagram of a logical model of a book market, pre-posting, at the host or central system of the present invention and illustrates the central system book in accordance with the present invention;

FIG. 5 is an illustrative diagram similar to FIG. 4 illustrating a typical keystation book as a subset of the central system book illustrated in FIG. 4;

FIG. 6 is a functional block diagram illustrating the flow of information in the system of the present invention in connection with a typical matching transaction, with the risk control transaction desks being omitted;

FIGS. 7 - 12 are illustrative diagrams of a typical IXM update broadcast message structure in accordance with the system of the present invention;

FIG. 13 is an illustrative diagram similar to FIG. 4, illustrating a book market entry position, at market, based on the example of FIG. 4;

FIG. 14 is an illustrative diagram similar to FIG. 4 of book market entry position, with the creation of a new sub-book based on the book illustration of FIG. 4;

FIG. 15 is an illustration similar to FIG. 4 of an auction market entry position, market equal, based on the book of FIG 4;

FIG. 16 is an illustrative diagram similar to FIG. 15 of the auction market entry position, with the market bettered, based on the book of FIG. 4;

FIG. 17 is an illustration of a logical model of the book market, similar to FIG. 4, after posting;

FIG. 18 is an illustrative diagram similar to FIG. 4 of the logical model of the book market of FIG. 4 after trade;.

FIG. 19 is an illustrative diagram showing typical order types which may be implemented with the system of the present invention;

FIG. 20 is an illustrative diagram of a typical credit limit display of assigned trading party credit limits at given client site in accordance with the system of the present invention;

FIG. 21 is an illustrative diagram of a typical potential broken trade situation in accordance with the risk control distributed matching system of the present invention;

FIG. 22 is an illustrative diagram of the flow of messages and control between keystations host, and transaction desks in order to implement the risk control features of the present invention;

FIG. 23 is an illustrative diagram of the heartbeat detection function of the present invention illustrating a reconfiguring of the network around a failure in accordance with the present invention;

FIG. 24 is an illustrative diagram of the fields contained in a typical match record in accordance with the present invention;

FIG. 25 is an illustrative diagram of the values of match status computed for a given buyer notification status and seller notification status in accordance with the present invention;

FIG. 26 is an illustrative diagram of the steps in trading both transaction desk type trade arbitration, in accordance with the p resent invention;

FIG. 27 is an illustrative diagram of a typical data flow of transactions in accordance with the present invention;

FIG. 28-31 are illustrative diagrams of the state of the book with respect to various typical transactions in accordance with the present invention;

FIG. 32 is an illustrative diagram of typical match notification transaction in accordance with the present invention; and

FIG. 33 is an illustrative diagram of match acknowledgment transactions in accordance with the present invention.

## *Best Mode for Carrying Out the Invention*

Referring now to to drawings in detail and initially to FIG. 1 thereof, the system of the present invention is a distributed anonymous matching system for use in trading various trading instruments, such as different foreign exchange currencies, which employs risk control to minimize the risk associated with broken trades, which are trades which occur whenever you have a network failure or a system failure or a keystation failure, and you are not entirely sure what trades were or were not completed at that time. In the system of the present invention as described herein, the trading is effectuated through anonymous matching as opposed to through the conversation video system described in US-A-4,531, 184; 4,525,779; and 4,404,551, commonly owned by applicants' assignee herein. Thus, the distributed risk control matching system of the present invention may be thought of as a computerized exchange in which its central role is to identify a buyer and a seller who are willing to trade with one another based on specified criteria, such as price, quantity and credit, with, as will be described in greater detail hereinafter, real time prices preferably being subject to real time credit. Thus, preferably, credit controls are used to determine the quantity of permissible match at the lowest common credit limit and the best bid/ask price for the largest available quantity to automatically complete a matched trade in the anonymous trading system of the present invention. When such a matching event occurs, preferably the buyer and seller are informed of the trade and sufficient information is then provided to them to complete the physical clearing of the transaction. In order to support this central function, the matching system requires various support functions one of which is preferably the maintenance of summary market information on the participant's workstation or keystation displays at the various client sites. Preferably in the system of the present invention, at all times the system will display the best inside price for every instrument traded on the system. The best inside price is preferably defined to be the highest value bid and the lowest value offer in the system. Preferably the prices are displayed together with the quantity bid or offered at the specified price so that the trader at the keystation can observe the market activity.

By observing the market activity, the trader can decide whether to enter a bid, or enter an offer into the market in an effort to complete a matching transaction. Preferably, the anonymous matching system of the present invention essentially maintains a book of bids and offers in the central system 20 or host computer. A user or keystation at a client site, such as client site 26a or 26b illustrated in FIG. 1, by way of example, interacts with the book by submitting bid, offer, hit, or take transactions. The order entry function is preferably conventionally achieved through data entry using a conventional keyboard, pointing device such as a mouse or any other conventional data entry tool. The central system 20 preferably validates the transaction request, processes the bid, offer, hit or take according to the rules of the market, and attempts to find matches between this new entry and the other bids and offers posted in the system book, subject to gross counterparty credit limits, as will be described in greater detail hereinafter, between the potential counterparties to a potential matching transaction. If a match is found, and satisfies all criteria, including not exceeding the gross counterparty credit limit, then the trade is preferably automatically executed, the participants to the trade are informed subject to the risk control to be described in greater detail hereafter with reference to FIGS. 21-23. All databases and trader screens are updated as to the quantities traded and the quantities remaining and, if desired, a clearing agency may be informed as to the details of the trade so that payments and exchanges may be completed. If, on the other hand, a match cannot be found, or the gross counterparty credit limit is exceeded by the potential match which would otherwise match based on price and quantity per se , then the system preferably either disposes of the entry for hit or take or keeps the entry for bid or offer for later processing. Preferably in all cases transactions are processed to completion according to certain rules to be described in greater detail hereinafter and the various client sites 26a, 26b preferably receive real-time updates of the new status of the trading instruments. Thus, as shown and preferred in FIG. 1, the client site systems 26a and 26b only two of which are shown by way of example in FIG. 1, submit transactions, such as represented by reference numeral 30, as well as assigned trading party credit limits, to the central system 20 via the communication network 22. As will be explained in greater detail hereinafter with reference to FIG. 6, the submission of a transaction 30 from a client site 26a or 26b to the central system 20 will preferably result in one or more messages, represented by reference numeral 32, going directly back as a directed message to the client site 26a in this example, which initiated the transaction message. Another effect of the transaction message 30 being sent to the central system 20 is that for certain sorts of transactions, a broadcast message 34 is generated by the central system 20 which is then delivered to all client sites 26a, 26b attached to the central system 20. Thus, the directed response or the directed message 32 only goes back to the particular client site 26a and, more particularly, the particular keystation, 24a by way of example, at that client site 26a which initiated the transaction message whereas the broadcast message 34 goes to all client sites 26a, 26b and all of the various keystations associated at those client sites 26a, 26b. With respect to the assigned trading party credit limits, it is these limits which are used by the central system 20 to determine the anonymous gross counterparty credit limits which are used to control the completion of matching transactions. By way of example, in FIG. 1 a typical client site 26a is shown as having keystations 24a, 24b, 24c through to 24n with the number of keystations merely being limited by the capacity of the system and the desired processing time. With respect to the distribution of the functionality in the system of the present invention, the communication network 22 preferably does not really play a part in that it is transparent to transactional information. By this what is meant is that when the transactional information leaves the client site 26a, for example, it could be, if desired, encrypted or garbled in a way that the only other entity which could understand it would be the central system 20 and that would be irrelevant to the function of the network 22 since the network does not look at the messages, does not process the messages, and merely transfers these messages to the appropriate parts of the system, such as to the central system 20. In this regard, the network 22 is functioning similar to a paired cable in that it is a conduit to pass the information back and forth. Of course, the network 22 has various other communication functions which, however, for purposes of understanding the present invention are unnecessary to go into. Suffice it to say that preferably, the communication network 22 uses a protocol which can be termed hierarchal fan-out in which one node transmits to multiple nodes which in turn transmits to multiple other nodes. Thus, network 22 helps implement broadcast capabilities integrated with a message switching network to achieve full tolerance and broadcast distribution. It should be noted, when a potential match occurs, and the gross counterparty credit limit is not exceeded for that potential match, the central system 20 will preferably send directed messages or responses to all of those parties in the system that were involved in the match, so that, in some instances, two, three or more client site 26 may be involved in receiving the directed message. However, this still differs from the broadcast message which is sent to all client sites irrespective of their involvement in a particular match.

Referring now to FIG. 2, this figure illustrates a typical data flow in accordance with the system of the present invention for entry of a bid or entry of an offer, with the network 22 being omitted since, as was previously mentioned, it is transparent to transactional information. First discussing the enter bid event in accordance with the system of the present invention, keystation 1 or 24a, submits a bid transaction to the central system 20. The directed message or directed response 32 which it receives back from the central system or host 20 is termed a bid acknowledgment or BID-ACK. This acknowledgment is a command acknowledgment which is preferably followed by an entry position message and, as was previously mentioned, is directed directly back to the keystation 24a. In addition, as shown and preferred in FIG. 2, a bid update message is broadcast by the central station 20 to all keystations in the system, such as represented by reference numeral 34a in FIG. 2. This broadcast message 34a preferably occurs if this new bid 32a was the new best bid in the system, or was an additional quantity being bid at the best price in the system. Thus, if this new bid 32a is at the highest price or better or higher, then it will result in a bid update broadcast message 34a going out throughout the system. In addition, as also shown by way of example in FIG. 2, if it is desired to disseminate an external ticker 60, then the ticker information 60 will also be provided of the best bid or best offer. Preferably, the same procedure is followed with respect to entry of an offer with the messages, in this instance, being identified as offer, given reference numeral 51, offer acknowledgment or OFFER-ACK, given reference numeral 32b, and the broadcast message for offer update, being given reference numeral 34b.

Referring now to FIG. 3, the data flow in accordance with the present invention is illustrated with respect to a situation in which there is a hit bid resulting in a trade. In this situation, there is substantially more activity than in the situation previously described with reference to FIG. 2. Thus, as shown and preferred in FIG. 3, if keystation 24b submits a transaction called "hit bid", represented by reference numeral 62, to the central station or host 20, a hit acknowledgment or HIT-ACK, represented by reference numeral 64, is provided back to keystation 24b as a directed message. At that point, the central system 20 will recognize that a match is possible because the "hit bid" message says that keystation 24b is willing to trade at the bid price. Assuming that the gross counterparty credit limit is not exceeded for this potential matching transaction, the central system 20 will determine that a match is possible. Preferably, however, as will be described in greater detail hereinafter with reference to FIGS. 21-33, before committing to the match, the central system 20 gets involved in a risk limiting protocol using a plurality of transaction desks, with one such transaction desk 70 being illustrated in FIG. 3, which determines whether the trade is possible, and if so, acknowledges this to the central system 20. Assuming that a trade is possible, and the gross counterparty credit limit has not been exceeded, then a match occurs. At that point several messages are generated from the central system 20. One of these messages is termed the match message, given reference numeral 65, which is a directed message that goes to the bidder, which in this instance is keystation 24b, and to the keystation 24a which originally owned the bid. Thus, in this instance, directed messages go to more than one keystation 24. Preferably, every match must be acknowledged so there is a match acknowledgment message, MATCH-ACK which comes back from the buyer and seller keystations 24b and 24a and is used to determine that the match was in fact received correctly and that the deal can be considered complete at that point. In addition, a broadcast message is generated that a trade has occurred which trade update message, given reference numeral 67, may possibly cause a new best bid to occur or could affect the quantity or price at the top of the book. Again, if the trades and best bids go into the ticker 60, then this information is provided to the ticker as well. Similarly, if clearing information is provided to a clearing house, this too occurs as represented by reference numeral 69. In addition, as shown and preferred, trade tickets may also be generated. Thus, trade ticket information is also preferably provided to the participating keystations 24a and 24b so that the trade tickets can be generated.

Referring now to FIGs. 4 and 5, illustrations of typical books employed in the distributed risk control matching system of the present invention are shown, with FIG. 4 illustrating a typical book at the central system 20 and FIG. 5 illustrating a typical keystation book at a typical keystation such as keystation 24a, based on the book of FIG. 4. The central station or host book illustrated in FIG. 4 is a logical model of the book market pre-posting and is divided into a bid side and an offer side. Each box in the diagram preferably stands for an entry into the side of the market. The value in the upper left hand corner of the box represents the price of the trading instrument and the value in the lower right hand corner represents the primary quantity of the trading instrument. As further shown and preferred in FIGS. 4 and 5, on the bid side the highest absolute value is at the top of the book and the lowest absolute value is at the bottom of the book, whereas on the offer side the worst relative offer value is at the top of the book and the best relative offer value is at the bottom of the book. In addition the time order of bids and offers goes from left to right with, on the bid side, the last bid being left most and the first bid being right most, whereas on the offer side, the first offer is left most and the last offer is right most. This convention is also followed in connection with the keystation book of FIG. 5 which is a subset of the system or central station or host book of FIG. 4. Thus, as can be seen in FIG. 5, the keystation books located at the client sites 26 maintain copies of the best bids and offers contained in the host book of FIG. 4 and use that information to generate displays at the keystations 24. In addition, as was previously mentioned, the display depth of the keystation book is controlled by the host computer 20. For example, in FIG. 5, a display depth of 3 is illustrated on the bid side and the offer side. It is this display depth which helps restrict the subset of the total depth of the book contained at the host computer or central system 20. In reality, there are two controls on the display depth, one is a central control by the host computer 20 which determines the maximum possible display depth for the keystation book, and the keystation 24 itself which, within that maximum parameter, can further limit the display depth of the book. Of course, the host computer also restricts the subset of the host book by limiting other information such as by withholding the identities of the parties until the transaction is completed and such other things as net together prices, and net together quantities, and maintains gross counterparty credit limits anonymously, not distributing assigned trading party credit limits to the keystations. It should be noted that in the illustrative example of FIGS. 4 and 5, bids and offers of equal goodness are drawn on the same order down the line. The central system book maintained by the host contains detailed information from each client site on the particulars of each bid or offer. Preferably each bid and offer is identified with a token to give it a unique handle by which it can be referred to in future transactions and is time-stamped based on entry into the system. As further shown and preferred in FIG. 5, the keystation book is a summary book which contains accumulated summaries of bids at the same price and offers at the same price. Thus, by way of example, block 71 in FIG. 4 is a summary of blocks 73, 75 and 77 in FIG. 4, which shows a total quantity of 10 at the price of 138.86, and block 80 is a summary of blocks 82 and 84 in FIG. 4 which shows a total quantity of 14 at the price 138.38. Similarly, on the offer side, block 86 is a summary of blocks 88 and 90 in FIG. 4, showing a total quantity of 9 at an offer price of 139.9, and block 92 is a summary of blocks of 94, 96 and 98, showing a total quantity of 13 at an offer price of 139.70. It should be noted that with respect to the offer side of FIG. 5, since the display depth is only three, the fourth worst offer represented by block 100 in FIG. 4 does not appear in the keystation book of FIG. 5 since it is outside the designated display depth range.

With respect to the user entry record maintained at the central database 20, preferably such items as the bidder offer indicator, the instrument ID number, the quote, the quantity, the time-stamp, the keystation transaction number, the host transaction number, the assigned trading party credit limits, etc. are maintained. If desired, different trading instruments may be quoted in different ways. For example, you may have some trading instruments quoted on the basis of absolute price and others on the basis of yield or discount, and so on. In addition, clearing information may be stored at the central system 20. As was previously mentioned, this type of information fully qualifies the entry to the host computer or central system 20 which can perform matching based on gross counterparty credit limits and the collection of bids and offers that it has at any particular point in time, whereas the client site or keystation 24 preferably maintains copies of only some of these fields so that it can create displays. Thus, the host or central system 20 reduces the amount of network overhead that is required by transmitting only summary information about the book and typically restricts the price depths that are sent down, such as the depth of three given in the example of FIG. 5. In addition, as previously mentioned above, the host will aggregate quantities at the same price level as illustrated in FIG. 5. In allocating the accumulated summary to a match, the rules generally followed are that it goes by price, time of entry to the system, and by credit.

Now we shall briefly discuss the IXM update message structure for broadcast messages. IXM as used herein is another name for the book or an instrument crossed with a market. The book maintenance protocol or operation block protocol is preferably a way for instructing the client sites 26 to add, drop or remove particular sub-books from their associated book displays. Preferably, the host 20 enforces a structure on the client site data base which is a queue of prices whose maximum display depth is that display depth that the host enforces for that particular instrument. The IXM update message is a broadcast message which preferably contains a number of fields, such as the identifying information for the trading instrument that is being effected by this updated message, with the information being tokenized in order to minimize the bandwidth used on the network. Thus, very short numbers are used to indicate things like the trading instrument or the user or the subscriber that the system is trying to affect. In this instance, the IXM update message instructs the client site 26 to update the information being maintained in a particular instrument and contains an IXM token. As shown and preferred in FIGS. 7 and 8, the IXM update message contains a number of fields for providing the requisite summary information, such as the number of highs, lows, trades, etc., which information is used to key into the rest of the message. Preferably IXM updates are cummulative and apply to the then current state of the book maintained at the client site 26. Thus, the IXM update preferably contains new information about an IXM and the state in context of the instruments book. The message is preferably of variable length and may or may not contain certain information blocks. The IXM sequence number field preferably represents a number of updates to an IXM. The keystation 24 uses this value to preferably ensure that it receives all updates to an IXM and that it does not apply an outdated update. The block list size preferably defines how many information blocks are required for the IXM. Preferably the size of the operations list may exceed the maximum size of the message. In such an instance, the IXM is segmented across multiple messages. The number of highs specifies that a high quote is being sent, which typically would be only a one or zero. Similarly the number of lows specifics that a low quote is being sent, which would typically only be a one or a zero. The number of trades preferably specifies the length of the trade list for the message which is used for the last trade statistic as well as for support of the ticker. Typically the IXM image would only have, at most, a single trade block to indicate the last trade if there was one. The number of operations preferably specifies the length of the operation list for the message. If the block list size does not equal the sum of the number of highs, number of lows, number of trades, and number of operations, the IXM has been segmented across multiple messages. At least one IXM segment message will then preferably follow. When the sum of all the number of highs, lows, trades and operations fields across the segmented messages equal the block list size, then preferably the IXM data set is complete.

In order to get the book initially at the keystation, it is requested from the central system 20 during an initialization sequence. Thus, the first thing that a keystation 24 at a client site 26 does when it connects the network 22 and, thereby, through to the central system 20, is to request a download of all the currently active books. The host 20 then preferably sends a snapshot of each book and, from then on, the central system 20 will continue to send out updates on either a periodic basis or immediately after each change to indicate that the various items in the book have changed.

It should be noted that, preferably, with a single parameter change at the host system 20, effectively the view which the entire "world" or system population obtains with respect to a particular instrument is effectively changed. In this regard, if the host system 20 sets the display depth equal to one then, preferably, that means that no one can look into the book and that the host will not send out updates off of the best price display. This display depth can, of course ,be dynamically changed by the host on a daily basis or on any other periodic basis desired to provide centralized control over the distribution of the book. It should be noted that preferably all of the data in the system is logical data; that is all of the fields have meaning to the system.

In this regard, in order to understand the distributed book structure of the present invention, it should be understood that a book as used herein is the repository for bids/offer information on a particular trading instrument. Depending where that book is maintained, the sort of information that goes into it is going to be different so that the repository for bid/offer information on a given financial instrument, such as Japanese Yen, in the host 20 contains things like individual bids and offers, their identities, the clearing information and all of that maintained in strict price/time priority; whereas the book on Japanese Yen maintained at the client site 26 preferably contains some summary information about the total quantity bid and offered at a particular price, and does not contain all bids and offers, it only contains the ones that are appropriate.

There are actually two collections of information which are being maintained at the client site 26. One of these collections of information is the book for each instrument which is maintained at the keystation 24 sites which have been given reference numerals 110, 112, by way of example in FIG. 6. Another book maintained at each site is the local entry data base or order book which has been given reference numerals 114 and 116 in FIG. 6. As previously mentioned, there is also the host or system book database, given reference numeral 118 in FIG. 6. Each time a client site 26 starts up as a keystation 24, as was previously mentioned, the keystation 24 is preferably initially empty and requests the download of the currently active books from the central system 20. As was previously mentioned, separate books are maintained for each trading instrument, so there would be a separate book for Japanese Yen, a separate book for Deutch Mark, a separate book for dollars, etc., assuming that the system of the present invention was used for trading foreign exchange currencies. Each of these books would be maintained at a given display depth. In this regard, it should be noted that an IXM update broadcast message is only broadcast when the price information is inside the assigned display depth that has been assigned by the host computer or central system 20. With respect to the local entry database or order books 114, 116, these order books 114, 116 are updated by directed messages from the central system 20 and/or record the orders of the particular keystation 24b or 24a which have been sent to the central system 20. In this regard, these order books 114, 116 are preferably kept current so that it is a listing only of orders which are still present in the central system 20 from the respective keystations 24b or 24a. This order database 114 and 116 gets modified, such as through the removal of data, due to various occurrences, such as when a complete match has occurred for a given order an entry remove message is provided, or if it is partial match you may get an entry message that tells you that only that a partial match has been done against that order. The match notification which was previously referred to preferably refers to a particular order that is contained in the order database 114 or 116 and indicates what quantity or portion of the order has been matched. If all of the order has been matched, the entire order is then preferably deleted from the respective order database 114 or 116. By way of example, if a bid were put in for ten million Yen at a price of 127 and the display was enabled, that is the display depth was set to something greater than or equal to one, then the central system 20 would preferably construct a broadcast message, which is the aforementioned IXM update broadcast message, which would inform all client sites 26 that a new bid had been added to the Yen book, assuming that were the instrument being traded. The IXM update message would instruct an operation block which would say add to index one the ten million at 127. As for the other parameters in the IXM update message, add index would equal one, type would equal bid, quote would equal 127 and quantity would equal ten million. In the above example, the transaction achieves two functions. The first function it achieves is that a bid is submitted and the host system 20 responds to the keystation 24a submitting the bid that the bid was accepted and that there was no ambiguity in that the bid is definitely in the system 20, the system 20 has it, and the local entry database 116 has it. The other function indicates that the bid was of a certain characteristic that the rest of the "trading world" in the system should know about and this is accomplished as a result of the IXM broadcast message which was generated to all of the client sites 26 which were then told about this in summary as opposed to being given all of the detailed information. It should be noted that, as previously mentioned, in terms of functional operation, the entry of a bid to the system is the same as entry of an offer.

In the situation when a trade occurs, this means that a matching offer is present in the system, the host system 20 has accepted that matching offer, and sends back the acknowledgment command, in effect retrieving the existing book on Yen, in the above example, finds out that there is ten million Yen at 127 in the book, adds to that the newly entered fifteen million and 127, and is aware that it has positioned fifteen million at 127. The host 20 then does the match up including that ten million and does the trade, taking out the existing bid, so it reduces that amount to zero million at 127 leaving over five million at 127 on the offer side. In this instance, as will be explained with reference to FIG. 6, at least two directed messages have been sent, actually four having been transmitted to the client sites 26 that are involved in the trade. The seller will get an indication that his Yen bid has traded by means of a match notification and he will, thereafter, be informed who the counterparty was after the match has been made. The clearing and settlement of the trade will then preferably be the responsibility of the subscribers. The counterparty who originally transmitted the offer and entry position message saying that it had a Yen offer positioned greater than the bid will then get an entry positioned Yen offer at five million at 127 and will get a match notification saying that, with respect to his offer, ten million of his original fifteen million has traded with the party who will then be identified Lastly, the IXM update broadcast message will be constructed and broadcast to all client sites 26 to update the trading book. That update message will preferably, in the above example, contain two operation blocks, one which will remove the bid information from the client book and the second which will post the new five million offer which remains on the offer side and will show that a trade took place. In addition, as was previously mentioned, if desired, ticker information will also be provided in the IXM update message saying what traded, keeping track of the cummulative volume, the net change, the number of changes, the high limits, the low limits and so forth. It should be noted that preferably only the keystation 24 that either executed the transaction or was involved somehow in that transaction will receive the directed message with respect thereto and not other keystations 24 at the same client site 26, whereas with respect to broadcast messages all keystations 24 at all client sites 26 receive these messages. If desired, with respect to credit, which does not form part of the present invention herein, this can be controlled on a client site 26 by client site 26 basis as opposed to a keystation 24 basis. Thus, in the system of the present invention, the network 22 has two functions, one of which is directed message delivery and the other of which is broadcast message delivery.

Referring now to FIG. 6 in greater detail, the network 22 which, as was previously mentioned, is transparent to transactional information has been omitted for purposes of explanation of the message flow in the system of the present invention, as has the risk control function using the transaction desks 70, to be described in greater detail with respect to FIGS. 21-23. For purposes of the example of FIG. 6, keystation 24a can represent any keystation which originates a transaction and keystation 24b can represent any keystations which are involved as counterparties in the transaction which, as was previously mentioned can be more than one keystation at more than one location. The keystations 24a and 24b are normally remotely located from each other such as, for example, keystation 24a being in New York and keystation 24b being in London. In addition, the keystations 24a and 24 b are remotely located from the central system 20. In order to understand the message flow illustrated in FIG. 6, we will assume that the originating keystation 24a is receiving a display of the keystation book database located at keystation 24a. Assuming that the operator at that keystation 24a then desires to enter a bid or an offer, either of which will be termed an order, this information is input to the keystation 24a via conventional means, such as a keyboard or a mouse by way of example. The keystation 24a then preferably validates the order and maintains its local order data base or local entry data base 116. The order, instead of being a bid or an offer, could be a hit or a take for a particular trading instrument as well since all of these various items would constitute an entry of an order. After the order has been entered, validated, and, the order data base 116 maintained, a transaction message is built and sent as a directed message to the central system 20. This is represented by reference numeral 120 in FIG. 6. This transaction message 120 is received by the central system 20 and contains transaction information. At this point, preferably the central system 20 sends back a directed message, termed a command acknowledgment message and given reference numeral 122, to inform keystation 24a that the transaction message 120 has been received. The transaction message 120 is time-stamped by the central system 20 at this point. Preferably the display of keystation 24a will indicate "please wait" until the transaction message 120 has been acknowledged. Preferably, such acknowledgment happens relatively quickly, such as in about two seconds, by way of example. The centra system 20 then preferably processes the transaction message 120 against the central system 20 stored copy of the system or host book which is contained in the host book data base 118 subject to gross counterparty credit limits. At this point, the central system 20 preferably either adds the entry of the transaction or the order from keystation 24a to the host book data base 118 or matches that entry against existing bids offers contained in the host book data base 118. Once that processing is completed, assuming the gross counterparty credit limit has not been exceeded, the central system 20 is ready to generate output messages not only to the originating keystation 24a, but possibly to other keystations 24 such as the counterparty keystations represented by 24b and, assuming the gross counterparty credit limit between keystations 24a and 24b has not been exceeded and that an update message is required, to all keystations in the system. Thus, central system 20 generates directed messages back to each of the keystations 24 involved in the matching transaction, such as 24a as the originating keystation and, assuming that there is a match, 24b as the counterparty keystation, and generates the IXM update broadcast message to all keystations 24. It should be noted that, as previously mentioned, a single transaction message 120 from keystation 24a, whether it is a hit, or a take, or a bid, by way of example, could result in multiple matches. For example, if keystation 24a wants to hit the bid for a quantity of 20, it is possible that to satisfy that order more than one match could be involved such, as for example, four or five different matches, particularly, since the keystation book at keystation 24a merely displays accumulated summaries of the bids or offers, such as represented by blocks 71, 80, 86 and 92 in FIG. 5. If multiple matches occur, then, thereafter, the identity of all of the counterparties involved in the multiple matches are displayed on the screen of the originating keystation 24a for a settlement purposes. Thus, on any given transaction, there will always be directed messages involving the transaction originator and involving one or more counterparties or affected parties in that trade or transaction. If the market is an auction market, then it preferably has a price depth of one so that this determines how many prices the central system 20 can maintain with only one price being maintained in an auction market. When a new bid goes in which betters the existing bid in an auction market, the existing bid is actually removed and effectively cancelled in the book. By way of example, an auction market is represented by FIGS. 15 and 16. Preferably, after all of the directed messages are generated to the counterparties, and the associated directed message acknowledgments, such as represented by reference numerals 124, 126, 128 and 130 in FIG. 6, the IXM update broadcast message, represented by reference numeral 132 in FIG. 6, is sent to all keystations 24 in the system regardless of whether or not they were involved in this particular matching transaction. It should be noted that preferably the first six steps illustrated in FIG. 6 with respect to the central system 20 are all essentially a-synchronous to any outside events. When the keystations 24a and 24b received the update broadcast message it will be processed against the local keystation book database 110, 112 and the local copy of the book will be maintained. As was previously mentioned, it should be noted that this local keystation book 110, 112 is not an exact carbon copy of the central system book 118 but rather is only a selected subset of it which comprises an accumulated summary of bids and offers within the assigned display depth. Thus, preferably, FIG. 6 illustrates a generic template for the processing of messages throughout the system of the present invention in order to provide the distributed functionality of the system.

It should be noted that the concept of originating keystation and counterparty keystation moves around with each transaction so that for each transaction the originator may be different and may for different transactions occurring at the same time be an originating keystation in one instance and a counterparty keystation in another instance. In addition, there are other instances in which the keystation may merely be a bystander and not involved in the particular transaction at all. Preferably the control of the overall distributed matching system is maintained by the central system 20 which operates in accordance with a set of rules, to be described in greater detail hereinafter, which govern how the transactions are processed. Preferably, the central system processes transactions against a particular trading instrument in time order of entry into the system. In this regard it should be noted that it is not time entry of orders per se but time entry of orders related to a particular trading book or trading instrument. Thus, there would be time order entry assigned to Yen, a different time order entry consideration assigned to Deutch Marks, and so forth if the trading instruments were foreign exchange currencies.

By way of example, FIGS. 13, 14, 17 and 18 are further illustrations of the book market, with FIG. 13 illustrating the book market entry position, at market, at the central data base; FIG. 14 illustrating the book market entry position for creation of a new sub-book; FIG. 17 illustrating a logical model of a book market after posting of a trade; and FIG. 18 illustrating a logical model of the book market after the trade. Preferably each side of the book market is made up of zero or more sub-books. In the example of FIG. 4, there are seven sub-books, four on the offer side and three on the bid side. Preferably there are two ways in which an entry can be positioned in a book market, both determined by the entry's value. If there exists a sub-book that has the same value as the new entry, the new entry is entered at the bottom of the sub-book, such as illustrated in FIG. 13. When the new entry equals the current best entry for the side of the market, the entry behaves in this fashion. If a sub-book with the same value as the new entry does not exist, then a new sub-book is created with the new entry placed at the top of the book, such as illustrated in FIG. 14. This sub-book is preferably positioned between other sub-books so that the value ordering of the sub-books is preserved. Preferably by definition a best entry does not have a value equal to that of any existing sub-book for that side of the market. A new sub-book is implicitly created when the new entry betters the current best price for that side of the market.

The behavior of an auction market, such as illustrated in FIGS. 15 and 16, is preferably dictated by the fact that there are at most one sub-book per side of a market. When an entry is worse than the current best entry, it is preferably rejected from the market. When an entry equals the current best entry, it is preferably accepted into the market and is positioned as the last entry in time order in the appropriate sub-book, such as shown in FIG. 15 by way of example. When an entry betters the existing value for the side of a market, the current entries in that side of the book are preferably cancelled, such as shown in FIG. 16 by way of example.

Referring once again to FIG. 17 and 18, matching is only attempted, preferably, when the posting function indicates that the best bid value is better than or equal to the best offer value. The matching function is preferably the same for both book markets and auction markets. In a book market, it is possible for any order to cross the market; that is, for a new bid to be higher than the best offer or a new offer to be lower than the best bid. In this case, trades are preferably allowable at multiple quotes filling the order starting at the best quote and working down to the quote specified in the new order as necessary to trade as much quantity as possible. Since the quote depth for an auction market is only 1, just the bid side and the offer side of a market are submitted to matching. If one or more matches are found, the following information is preferably given for each matching pair; namely, the buyer, the seller, the instrument, the quantity traded and the quote. As is shown by way of example in FIG. 17, there is a bid which has been introduced at the value of 139.19, a value that betters the current best bid. Since there exists no sub-book on this price on the bid side of the book, a new one is created. At this point, the best bid value is equal to the best offer value so the bid and offer sub-books with the value of 139.19 are submitted to the matching function. Assuming that the gross counterparty credit limit is not exceeded, then both of the offer entries are fully traded for a trade total quantity of nine. The bid is only partially traded and a quantity of one remains. It should be noted that with respect to FIG. 4, there are seven sub-books in the market, three on the bid side and four on the offer side with a value spread between the bid side and the offer side of the market currently existing so that no matching could take place at that time. FIG. 18 illustrates the logical model of the book market after the trade is over. In this instance the offer sub-book with a value of 139.19 in the above example has no more entries in it so the sub-book is removed. There is a bid remaining at that quantity so it remains in the sub-book. A new value spread now exists in the book.

Thus, with the system of the present invention, the books may be distributed among the keystations through the use of summary books so that information is distributed between the central system 20 and the keystations 24 in such a way that all of the right information, and only the right information, is made available at the geographically dispersed keystations. The keystations 24 need information to generate their displays which displays, in the system of the present invention, can be as up to date as possible so that the traders are provided with accurate information regarding the instruments available for trade while the keystations 24 are prevented from receiving disclosure information that they are not entitled to or that should be withheld from them because it is an anonymous trading system. Thus, not only does the distributed risk control matching system of the present invention provide for efficient transmission of information with a minimization of losses due to broken trades, but it enables the host to controllably mask the available trading market.

Now referring to FIGS. 19 and 20, the credit control function and the more quantity function of the system of the present invention shall now be described in greater detail. As was previously mentioned, there are two types of quantity in the system of the present invention; namely primary quantity and more quantity. Primary quantity is the amount which is disclosed in connection with the books distributed to the keystations 24 from the host 20 whereas more quantity is kept anonymous by the system of the present invention. Thus, the more quantity is not disclosed to the market at the time that the bid or offer is made but rather is hidden. In addition, as previously mentioned, credit limits are also anonymous in the system of the present invention. These trading party credit limits which are assigned by the individual keystations 24 or client sites 26 to those other keystations 24 or client sites 26 in the system in which they wish to trade, or not trade as the case may be, are preferably held anonymously in the central system 20 which determines the gross counterparty credit limits. Thus, the only individuals who know what the trading credit limits are are the owners of those credit limits; that is, the keystations 24 assigning the particular trading party credit limit. In this regard, if a trading party credit limit is set to zero then you will not trade with that party. Preferably, in determining the rules of matching to be applied by the system in the present invention, a bid can only match with an offer and an offer can only match with a bid. Thus, an order eligibility is preferably determined which says that eventually bids with offers, where there is a non-zero credit line between the counterparties for the same trading instrument, are eligible for a match where the buy price is greater than or equal to the sell price. Next, there should preferably be a quantity match, with the match quantity preferably being equal to the minimum of credit, remaining quantity of the new order, or remaining of the standing order. Thus, the match quantity is the minimum of these three things. In this regard, preferably the match may occur to the entirety of an order as opposed to distributing the order or match amongst several possible orders. In addition, preferably the priority of matching is based on time precedence; in other words, first in first out. Preferably the system of the present invention tries to maximize the total trade size each time a match occurs. In determining standing order priority, preferably it is based first on price, second on quantity type, and third on time stamp or time of entry into the system. Preferably in considering quantity type, the bid with more quantity is considered to be two bids, one of which is an offer of primary quantity at a certain price and then an offer for more quantity at a different price. Preferably the primary quantity has a higher priority than the more quantity type. By way of example in trying to understand the more quantity concept, assume that there is a new order which is bid at a dollar for quantity of 30. The system will first determine that this order should be matched against standing orders that are eligible. Assuming all the orders are eligible orders, then the system is going to say that against each one it will trade up to its maximum and will keep trading until its all done. In this regard, if in the course of matching you run up against a credit limit which causes the gross counterparty credit to be exceeded, then the matching trade occurs up to the gross counterparty limit so that the match size is the minimum of the credit, the standing order size or the primary size. As was previously mentioned, the system of the present invention basically operates with credit limits on the concept of gross counterparty limit. In this regard it is not enough for a keystation 24 to extend a trading party limit to a counterparty, it is also preferably necessary that the counterparty extend a trading party credit limit to that keystation, in which instance the minimum of the two trading party credit limits would represent the credit line or gross counterparty limit between the two keystations. By way of example, if the keystation 24a buys 10 million dollars worth of Deutch marks from another keystation 24b and sells 10 million dollars worth of Deutch marks to that same keystation 24b, that transaction would have consumed 20 million dollars of the gross counterparty credit limit between these two keystations 24a, 26b. Of course, if desired according to the system of the present invention, any trading party credit limit can be changed or all credit limits may be reset. Preferably the minimum of the credit that a keystation 24 has remaining with another keystation 24 and the credit that that keystation 24 has with the originating keystation 24 will determine the maximum possible match size.

In addition to the above, there is a credit alert threshold. Preferably the permission to modify credit limits in the system of the present invention is only given to somebody having that special privilege. Preferably, if in the course of trading your credit remaining goes to a value less than 25% of the original value of the credit limit, an alert is sent out to anybody with permission to modify the limit. Thus, the credit limit alert informs a particular keystation 24 that it is trading dangerously low to the assigned credit limits it has given and that those limits are going to start blocking or inhibiting trades if nothing is done about changing them. As was previously mentioned, although credit limits are assigned to individual keystations 24 they are held in the central system 20 so that when a potential matching trade is to occur, it's not the keystation 24 function to determine the size of that trade but rather it is the central system 20 function. Because of credit limits, it is possible that a bid or offer could be put into the system which is not capable of being matched with any other bid or offer because all of the trading party credit limits assigned by the originating keystation 24 are zero or because no other keystation 24 in the system has extended a trading party credit limit to the new keystation 24 entering the system.

Furthermore as previously mentioned, the matching algorithm employed in the central system 20 of the present invention preferably uses credit controls to determine the quantity of permissable match to the lowest common limit and the best bid/ask price for the largest available quantity to automatically complete a matching transaction or trade. Thus, a matching system is provided in which real time prices are the subject of real time credit. Moreover it should be noted that preferably prices of the best available bid are used to dynamically update prices.

Summarizing the presently preferred matching rules for the system of the present invention, a new order is eligible to be matched with a standing order and a trade or matching transaction will result whenever one order is a buy order, the other is a sell order, the buy order and sell order originate from different entities, a non-zero and credit line exists between the two entities, the two orders are against the same instrument, and the price of the buy order is greater than that of the price of the sell order. Secondly, if an order match is possible according to the above criteria of order eligibility, then the trading transaction would take place at the price of the standing order preferably. Moreover if an order match is possible according to the criteria of order eligibility, then the trade will preferably take place for a quantity equal to the minimum of the available credit line, the remaining quantity of the new order, and the remaining quantity of the standing order. Whereas the order eligibility rule defines the criteria for matching, the quantity rule is used to define the size of an eligible trade. Preferably, if there are multiple standing order eligible for matching against a new order is then matches will be considered in priority sequence until one of the following conditions are obtained; namely the new order completely filled or all eligible standing orders have been considered. Thus, simply stated, each new order is traded to its maximum potential. Preferably the priority of the standing order relative to other standing orders for the same instrument is based on price, quantity type, and time stamp. With respect to price, for buy orders, preferably the higher price is the higher priority and for sell orders the lower price is the higher priority. With respect to quantity type, preferably a standing order for primary quantity has a higher priority than a standing order for more quantity if they are both at the same price. With respect to time stamp, preferably within the same price and same quantity type, older orders have a higher priority than more recent orders. Thus, the sort sequence for standing order priorities preferably by price, the quantity type, by time stamp. In this regard, however, if more quantity is at a better fill price, then it has a higher priority than primary quantity.

Whenever a party initiates a credit change transaction which increases the credit extended to one or more counterparties the following sequence of events occurs: credit changes performed; all the subscriber's bids and offers in crossed markets, which is a market in which to bid price is equal to or greater than the offer price, are evaluated for trade potential with standing orders on the opposite side of the book; if any single instrument contains multiple bids or offers from the entity who has performed the credit change, then these bids and offers are evaluated in time sequence; and if the party who has performed the credit change has bids and offers in multiple instruments with crossed markets, then the individual instruments are evaluated in an arbitrary sequence.

Preferably, the system of the present invention supports four different order types which are used to buy or sell instruments in the matching system of the present invention. These order types are referred to as bid, offer, hit (also known as yours), and take (also known as mine). These orders are preferably differentiated from one another according to a set of time, price and size constraints which are either explicitly or implicity provided at the time of order entry. Preferably all system orders, regardless of type, are price limit orders. This means that the order, whether it be bid, offer, hit, or take, is preferably restricted to execute at the specified price or better. For a bid or take, the term "or better" preferably means at the specified price or lower, whereas for an offer or hit, this term preferably means at the specified price or higher. Furthermore, every system order must preferably carry one of two possible time constraints which are actually implied by the order type. Hit and take orders have the implied constraint fill-or-kill (FOK). These orders must be fully or partially filled at the time they are presented and then they are removed from the system or killed. Bid and offer orders preferably have the applied constraint good 'till cancel (GTC). These orders preferably must remain in the system until explicity cancelled or until the end of the user's session. In addition to these order limitations, all orders must preferably specify primary quantity. In the case of bid and offer orders, more quantity may also be preferably included with the order but only if a primary quantity is also included. FIG. 19 is aN illustration of the order types implemented in the system of the present invention with fill-or-kill represented by the expression FOK and good-till-cancel represented by the expression GTC. It should be noted that preferably hit or take specifies a price which crosses the market, that is a hit with a price lower than the best bid, and is effectively a market order in the sense of the commodities markets and will execute at the best available price, and will go as far into the order book as needed until the order is filled or the limit price is reached.

With respect to the credit control mechanism of the present invention, it comprises gross counterparty credit limit controls, as was previously mentioned. Thus each party is allowed to extend a credit limit or trading party credit limit to any other counterparty in the system. It is the act of extending a trading party credit limit which allows trades to take place between two keystations 24. Assuming two keystations 24 have each extended credit to one another, they will be allowed to trade until the remaining credit reaches zero. Every trade will draw down the available credit line for both sides of the trade and preferably, no trade may take place unless sufficient credit is available on both sides.

Basically four credit control functions are implemented in the system in the present invention. These functions are modified credit limits, reset credit limits, view credit limits, and credit limit alert. When the modified credit limits function is involved, the user is preferably presented with a list of all subscribers on the system. The user desirous of modifying credit limits may then assign a numerical credit limit to any subscriber in that list. When complete, a new list of trading party credit limits is sent to the host or central system 20 thereby defining a new current and future default credit limit for the originating subscriber. In addition, at any time, a user may invoke the reset credit limits function thereby resetting all counterparty credit limits to their original default values. This function would normally be performed prior to the start of trading each day. Credit limits are preferably reset for each counterparty to the last value specified in a modified credit limit function for that counterparty. In order for a trader to see how much of the original credit line remains to other subscribers, a view credit limits function may be selected. When this function is executed, the central system 20 preferably supplies a list of all counterparties to whom a credit line has been extended, together with the dollar amount of the original credit limit which remains. The information is preferably provided as a snapshot; namely, it will not dynamically update as trades take place. As was previously mentioned, the credit limit alert function identifies an impending total draw down of counterparty credit lines. Preferably, the credit limit alert is sent once for each trade performed after the 75% threshold is reached. The credit limit alert is only preferably triggered when a trade occurs within the threshold region. If the credit becomes totally exhausted, then preferably no further trading will occur and no further alerts will be generated. Preferably, any user or keystation 24 may retrieve his and only his site's credit list for viewing only, with the information being presented, by way of example, in the form illustrated in FIG. 20. In FIG. 20, the credit limit field is the maximum gross dollar amount of trading permitted between the requestor organization and the identified counterparty organization, and the credit remaining field is the original credit limit plus all trades executed since credit was reset with this counterparty. The display is preferably non-updating; that is the credit remaining column will not change once on display even if trades take place within the named organization.

Thus, by using credit control in accordance with the present invention, subscribers may limit the amount of credit exposure they have with other subscribers in the system of the present invention, with credit control being managed as a gross counterparty limit extended on a subscriber-to-subscriber basis across all trading instruments. In accordance with the system of the present invention, completion of potential matching transactions between transaction originating keystations and counterparty keystations are inhibited or blocked when the potential matching transaction has an associated value in excess of the gross counterparty credit limit. Thus, the credit control mechanism of the present invention controls who subscribers trade with in an anonymous trading system which is important since the identities of the parties involved in a trade are not revealed until after the trade has taken place at a time which would be too late to unwind the trade.

Referring now to the drawings in detail, and particularly to FIGS. 21-33, the presently preferred risk control aspects of the distributed risk control matching system of the present invention shall now be described in greater detail. Referring initially to FIG. 21, I shall now explain how the system gets into a broken match situation where the various parties may not know precisely what has happened in the split seconds immediately before a failure. Once again, the network 22 has been omitted from FIG. 21 as have the various other portions of the system illustrated in FIG. 6 since they are necessary to understand the operation of the risk control aspect of the distributed risk control matching system of the present invention. Assuming for purposes of FIG. 21, the host book data base 118 has an offer present from keystation 24a for 10 million dollars of Yen at 1.7 and keystation 24b puts in a matching bid into the host database book 118, again, by way of example, putting in a matching bid for 10 million Yen at 1.7. As was previously discussed, the host 20 would respond with a match acknowledgment, perform the match and then send out a match notification in the form of a directed message to each of the two counterparties 24a and 24b with, in the above example, keystation 24a getting a match notification that it matched with keystation 24b at 10 million dollars of Yen at 1.7, and keystation 24b getting a match notification that it matched with keystation 24a, again for 10 million dollars of Yen at 1.7. In this manner, both parties to the transaction, keystations 24a and 24b would know that they traded with other and the host 20 would record all this information in a match log 200. In reality, the preferred sequence of events, is that the match is processed by the host 20, is found to exist, the match is recorded in the match log 200, and thereafter, the counterparties to the match, keystations 24a and 24b are informed of the trade. Of course, in the above example, a broken match has not occurred. However, there are several ways in which a broken match could occurr in the presence of a failure, such as, keystation 24 failure, a network 22 failure, or a host 20 failure. By way of example, I shall consider two such potential failures.

Assume, for example, that keystation 24a who is the bidder in the above example, fails or is disconnected immediately after submitting the bid for some reason or another and, thus, the network connection for keystation 24a fails. Thus, keystation 24a is then disconnected from the network 22. However, the host computer 20 is not yet aware of this and has presumably received the bid from keystation 24a and is now processing this bid to completion. As was previously discussed, once the host 20 receives a message, it preferably does not stop for any reason in processing that message and processes it to completion regardless of what else has happened even though, in the above example, either the keystation 24a or the network 22 has failed. Thus, in the above example, a match would be generated and recorded in the match log 200 and, thereafter, as was previously explained, the host computer 20 would then send out match notifications to the counterparty keystations 24a and 24b. In this example, keystation 24b, which is still connected to the network 22 and therefrom to the host computer 20, will still get its match notification; however, keystation 24a which has been disconnected from the network due to failure of the keystation 24a or the network 22 will not get its match notification. This will result in a broken trade where keystation 24b knows that he has traded as a result of receiving the match notification but keystation 24a does not yet know that a trade has occurred. In an anonyomous matching system, once a trade has occurred due to a match, it is normally considered to have taken place even though one of the parties to the trade has not received a match notification. Thus, the risk control aspect of the present invention comes into play. Of course, if the host computer 20 fails before any match notification has been provided to any of the parties to the trade, then nothing has been written to the match log 20 and it is as if the trade has not taken place. Thus, in reality, there are at least three parties to every trade in the risk control distributed matching system of the present invention; namely, there's a buyer, a seller, and the central system 20.

Preferably, each live keystation 24 when it receives a match notification in the system of the present invention, it is preferably obliged to send back a positive match acknowledgment which indicates to the host computer 20 that this particular keystation 24a or 24b has received the matched notification and recorded it in its database 110 or 112. Thus, in this manner, the host computer 20 can readily determine whether any keystations 24a, 24b, by way of example, have failed and whether or not these keystations 24a, 24b have received their matched notifications from the host computer 20. Preferably, if a match acknowledgment signal is not returned from a keystation 24a or 24b within a predetermined interval, then a broken trade alert occurrs and indicates to the host computer 20 that the particular keystation 24 has failed and should be otherwise notified of the currents of a match. In this regard, in a foreign exchange currency trading market, which is a dynamic market, time is of the essence and such notification should preferably be promptly provided. If, however, the host computer 20 fails, then a different type of situation must be set up in order to insure that any match which is recorded to the match log 200 is retrievable and can be used to notify the parties to that a trade has occurred. In order to do this, as shown and preferred in FIG. 21, the plurality of transaction dejecting computers or transaction desks, or T-desks, such as three such computers 70a, 70b and 70c, are employed. As will be explained in greater detail hereinafter, these transaction computers 70a, 70b and 70c preferably guarantee the recording of the details of each match before the match is written to the match log 200 so that even in the presence of a host computer 20 failure, the system will know what is potentially in the match log 200 and, therefore, what is a broken match.

Refer now to FIG. 22, the flow of messages and control between keystations 24a, 24b, host computer 20, and the transaction computers 70a, 70b and 70c in order to implement the presently preferred risk control feature of the present invention is shown. Starting at the point in the match processing where the host computer 20 has already received a transaction from a keystation 24a and has concluded that it is about to process a match or produce a match, the host computer 20 determines all the details of a match but preferably does not yet write it to the match log 200. Instead, the host computer 20 first preferably broadcast all of these matched details to all available transaction computers 70a, 70b and 70c in the above examples. At each of the transaction computers 70a, 70b and 70c, the match details are received and are recorded in the local database located at each of the transaction computers 70a, 70b and 70c. Preferably each transaction computer 70a, 70b, 70c keeps and identical local database of matched details that it has received from the host computer 20. At this point, each of the transaction computers a, 70b, 70c preferably starts a timer, such as preferably 15 to 20 seconds, and the respective transaction computer 70a, 70b and 70c send an acknowledgment or "vote" to the host computer 20, with each transaction computer 70a, 70b, 70c preferably carrying one acknowledgment or "vote" to send back to the host computer 20. The host computer 20 preferably waits for all the transaction computers 70a, 70b and 70c to send an acknowledgment or "vote" back to the host computer 20, or the very least, preferably waits for a required minimum number of acknowledgments or "votes" to come back from the transaction computer 70a, 70b and 70c. Typically, preferably the minimum number of "votes" required is something less than the maximum of available number of transaction computers 70a, 70b,.70c so that the potential for operating even in the presence of a given transaction 70a, 70b, 70c failure exists. In the above example of FIG. 22 where three isolated computers 70a, 70b, 70c are shown, a minimum number of two "votes" out of the three would preferably be satisfactory for a match to be completed. At this point, preferably no match notifications have yet gone out to the keystations 24, rather just the host computer 20 has notified the transaction computer 70a, 70b, 70c that it has gotten match information and is almost ready to go. Thus, as long as the host computer 20 preferably receives a majority vote in the above example, the host computer 20 then concludes that it can committ to the match and permanently writes the match to its match log 200. After writing to the match log 200, the host computer 20 then notifies the aggressor and all the counterparties 24 of this match by sending match notifications to these keystations 24a, 24b which, in turn, as was previously mentioned, send match acknowledgments, thereafter, back to the host computer 20. For each match acknowledgment received by the host computer 20, the host computer 20 forwards the acknowledgment onto the transaction computer 70a, 70b, 70c. When a transaction computer 70a, 70b, 70c receives a match acknowledgment for a particular match from the host computer 20, it preferably cancels the timer that it had started previously at the time it received the matched details initially from the host computer 20 and provided the "vote" or acknowledgment signal back to the host computer 20. In this regard, each transaction computer 70a, 70b, 70c is aware how many match acknowledgments are supposed to come back for each match with at least two such acknowledgments being required. If all of the required acknowledgments are not received by the transaction computer 70a, 70b, 70c, and the timer expires, then the database is preferably checked to see which acknowledgments have been received and, thereafter the keystations which have not provided the required match acknowledgments are then preferably notified of the existence of the trade. If desired, depending on the trade rules set up in the system, if one of the parties does not receive a match notification because of a system failure, then that party can be manually notified of the potential trade and given the option of either completing the trade itself or, alternatively, the trade can be laid off on a bank of last resort, assuming that the trading instruments are foreign exchange currencies. Preferably, the multiple transaction computers 70a, 70b, 70c are located with at least one of these computers 70c being remote from the other two 70a, and 70b, and with two of these three transaction computers preferably being co-located, 70a, 70b. In this manner, preferably the two transaction computers 70a and 70b which are co-located locally will "vote" very quickly and the system can then continue rapidly moving on so that the trade rate does not have to be throttled back significantly in order to provide the desired risk control. However, this co-location would normally increase the risk that both transaction computers 70a and 70b could be subject to a coordinated failure. Therefore, the third transaction computer 70c is located remotely to minimize the risk that all of the transaction computers 70a, 70b, 70c would be affected by common disaster.

Another potential risk control problem which the presently preferred system of the present invention seeks to avoid is that of a keystation 24 failure after a bid has been put into the system but before a match has occurred. If that bid is left in the system for any length of time after such failure, the probability that some o will trade or match that bid is significantly increased. In order to minimize the risk of such broken trade, preferably, the window where the host computer 20 is unaware of a keystation failure must be preferably minimized. In this regard, preferably as soon as the host computer 20 knows that a keystation 24 has failed or that conactavity with the other keystations in the system is lost, the host computer preferably cancels all bids and offers for that keystation 24 by removing them from the host database book 118, as long as no match has been completed. In order to accomplish this, as will be described in greater detail hereinafter, application based heartbeat signals are provided from each of the keystations 24 to the host computer 20. An example of a network setup in order to monitor or re-route signals in connection with the presently preferred application based heartbeat signals is shown by way of example in FIG. 23. As will be described in greater detail hereinafter, the heartbeat signals and the transaction computer protocol described above, operate in conjunction to minimize risk. In this regard, the previously mentioned transaction computer 70a, 70b, 70c protocol and its associated "voting" protocol is the preferred manner in which broken trades are identified while the heartbeat signals is the manner in which the incidents of such broken trades is minimized. Of course, the aforementioned transaction computer 70a, 70b, 70c protocol would work even if heartbeat signals were not provided to minimize the incidents of broken trades, however, a much more efficient and better risk control system is provided if both of these features are present. By way of example, FIG. 23 shows the presence of five concentrator computers, such as the type of concentrators described in the previously mentioned patents of applicant's assignee relating to other foreign exchange dealing systems of said assignee. These conventional concentrator computers are labeled 202, 204, 206, 208, and 210 in FIG. 23 with the keystations 24a and 24b also being shown along with host computer 20. These concentrator computers 202, 204, 206, 208, and 210 preferably collect traffic from a number of different sources into a single "type" to the host computer 20 and operate such as switching nodes in the system of the present invention. In the example of FIG. 23, assume that a message path is set up in keystation 24a, through concentrated 210, concentrated 208, concentrated 202, to the host computer 20. The heartbeat protocol is essentially a periodic, irregular, periodic monitoring of the wellness of each link which is accomplished by sending a heartbeat message signal in both directions from the keystation 24a up to the host computer 20 and from the host computer 20 back down to the keystation 24a, in the above example. In this regard, the keystation 24a sends a heartbeat message to concentrator 210 which in turn sends a heartbeat message to concentrator 208 which in turn sends a heartbeat message to concentrator 202 which in turn sends a heartbeat message to host computer 20 and, thereafter, the reverse occurrs back down the link ultimately to the keystation 24a. Preferably, the heartbeat message is an application based on heartbeat message and maybe a regular data message or, alternatively a non-data heartbeat message. Preferably, timers are employed to determine that the particular heartbeat message is received in a predetermined measurement interval, with the respective timers being preferably reset each time a heartbeat or regular message arrives at the designated point. If it is not received in a predetermined time, then preferably, the link which fails to provide the heartbeat message is dissolved. Moreover, preferably if a link is dissolved in connection with the heartbeat protocol, then the entire root is dissolved. Preferably, the heartbeat timer is set at a value that is high enough that you can mask transients but still low enough to determine the period of time during which the system is vulnerable to broken trades. Preferably, this value is typically set at about an 8 second detection time. Thus, basically there are three distinct risk control features going on in the presently preferred system of the present invention; there is the presence of positive match acknowledgments which are employed to determine consistency of the distributed network; the use of the isolated transaction computer 70a, 70b, 70c which "votes" to overcome failures of the central system or host computer 20; and the use of heartbeats to enable rapid detection and a loss of conactivity so that entries from a failed keystation can rapidly be removed from the book 118.

As also shown in and preferred in FIG. 23, failures can be reconfigured around in the system of the present invention assuming that the failure is not due to the keystation 24a per se but rather is due to one of the network links between the keystation 24a and the host computer 20.

Referring now to Figs. 24-33, trade arbitration, which is the process by which a trading system decides whether to commit or abort a trade based on the current system operating environment, shall be described in greater detail. Preferably, the system of the present invention supports two types of trade arbitration based upon the setting of a system-wide global parameter; one is termed host trade arbitration, which is a process which involves decision making in the host trading server 20 only; and the other is termed transaction desk or computer 70a, 70b, 70c arbitration with positive acknowledgement, which is the system described above with respect to Figs. 21-23.

In the process of host 20 trade arbitrators, the trading server 20 preferably commits or aborts the trade without regaro to external influences such as client-site 26, network 22, or transaction desk 70 failures. This process provides high transaction processing performance in conjunction with the ultimate detection of all broken trades. The maximum length of time that a broken trade can go undetected is limited to the maximum length of time it takes to recover the host system 20 in case of failure. By way of example, recovery could take approximately 180 seconds in the case of a single component failure. This estimate is obtained by adding a worst case cluster transition time of 75 seconds (HSC failure), a worst case database recovery time of 60 seconds, and an application startup and recovery time of approximately 45 seconds. Typical host recovery times for single component failures under such circumstances, are in the range of 3 to 75 seconds. In the case of multiple component failures the recovery time could be much longer or recovery might not even be possible. If recovery is possible the recovery time would be given by the time it takes to repair enough of the components to arrive at a "workable" host 20 system. Simultaneous destruction of all database disks would effectively make recovery of the trade log and detection of broken trade impossible in the context of the host 20system.

With respect to the aforementioned transaction desk or computer 70 arbitration with positive acknowledgement, as previously mentioned, this is a process which involves the host 20 and a set of transaction desks 70a, 70b, 70c in deciding the commit or abort status of each and every trade. In this process the trading server 20, as was previously mentioned, commits or aborts the trade depending on the number of "votes" received from the active set of transaction desks 70a, 70b, 70c. The voting arrangement is typically adjusted so that a minimum of one transaction desk 70 or two of three has recorded the possibility of the trade and has voted affirmatively to commit the trade before the trade is actually commited by the host computer 20. Client-site 26 or network 22 failures do not affect the commit or abort status of a trade once the processing of the enclosing transaction has started.

This process provides the same basic capabilities as the Host Trade Arbitration process in that all broken trades are detected, but with a smaller worst-case detection time and better performance in the event of multiple failures. Preferably, in this process, the maximum length of time that a broken trade can go undetected is limited to the maximum of: the length of time it takes to recover the host 20 system in case of failure, and the length of time it takes a transaction desk 70 to detect a broken trade. As was previously mentioned, transaction desks 70 detect broken trades using their own internal timers. These timers can be set as low as desired. However, in order to avoid large numbers of false alarms, transaction desk 70 timers should preferably typically be set no lower than about 16 seconds. This value is obtained by the sum of the total network round trip delay [2 + 2 seconds], the worst-case network recovery time for recoveries which preserve the user session [8 seconds], and processing delays in keystation 24, host 20, and the transaction desk 70 processes [4 seconds total]. Single failures which take the host 20 out of service for longer than the transaction desk 70 timer, will preferably trigger broken trade alarms at all active transaction desks 70. Transaction desks 70 are preferably replicated so that single failures of transaction desks 70 will still allow triggering of broken trade alarms at all remaining transaction desks 70. Multiple failures consisting of a host 20 plus a transaction desk 70 will preferably trigger broken trade alarms at all remaining transaction desks 70. Simultaneous failure of all transaction desks 70 will preferably trigger a transaction desk 70 failure alarm at the host 20 force an abort and rollback of all currently in-progress trades before they become eligible to be broken, and force the host 20 into a non-trading mode. All outstanding matches currently involved in match acknowledgement would preferably continue to be monitored by the host 20, and match acknowledgement failures would result in broken trade alarms being presented to the operator console. Preferably, a simultaneous failure of the host 20 and all transaction desks 70 is considered a catastrophic failure and will not be recovered. The above T-desk arbitration process although being more beneficial, sacrifices some transaction processing performance in order to involve the independent transaction desk 70 entities in each and every trade.

As was previously mentioned, Trade Arbitration exists in order to preferably place an upper limit on the length of time that a broken trade or match can go undetected. The fields contained in a typical match record, by way of example, are illustrated in FIG. 24, with the match records preferably being recorded in the match log 200, one record per match. The various portions of the match record shown in FIG. 24 are defined as follows. Buyer Notification Status and Seller Notification Status reflect the status of match notifications sent to the subscribers 24 and match notification acknowledgements received. Status reflects the overall status of the match and is calculated from the buyer and seller notification status fields by the match acknowledgement protocol which proves that it is always possible to determine if a match, and therefore a trade, is BROKEN or NON-BROKEN in finite time. A further refinement of this protocol shows that the BROKEN state can be further divided into SINGLY-BROKEN and DOUBLY-BROKEN sub-states. This refinement aids in the determination of appropriate recovery procedures. When a match is formed, both Buyer Notification Status and Seller Notification Status are set to UNKNOWN. This reflects the fact that no match notifications have yet been sent. Neither the buyer nor seller know they have been involved in the match. Notification has neither failed nor succeeded, therefore it is unknown. Match notifications are then sent to both buyer and seller, and timers are started to detect failure to respond. Each subscriber 24 independently logs their match notification and acknowledges receipt by returning an acknowledgement message. If the buyer or seller acknowledgement returns, the appropriate field in the match record is updated to SUCCESS. If the buyer or seller acknowledgement timer has expired, the appropriate field in the match record is updated to FAILURE. Assume that the host 20 has only two states: operation and failed. In the absence of host 20 failures, you are guaranteed that either the acknowledgement returns or the timer expires. Therefore, both buyer and seller notification status fields will transition from the UNKNOWN state to either SUCCESS or FAILURE. In the presence of host 20 failures, (both/either) buyer (and/or) seller notification status fields may be left in the UNKNOWN state. Therefore, on a host 20 failure and subsequent recovery, the system preferably scans all existing match records to find those in which either the buyer or seller notification status fields are UNKNOWN and sets these to FAILURE. Now both buyer and seller notification status fields are in states SUCCESS or FAILURE. In any case (host 20 failure or not), when both buyer and seller notification status fields are in states SUCCESS or FAILURE there is a clear indication of the combined SUCCESS or FAILURE of the match notification plus acknowledgement process itself. When both buyer and seller notification status fields are in state SUCCESS then the match is positively acknowledged by both parties . The match is then NON-BROKEN. Any other combination of states preferably yields a BROKEN match . The BROKEN match state preferably consists of two sub-states: a one-way broken state and a two-way broken state. These are called SINGLY-BROKEN and DOUBLY-BROKEN, respectively. The SINGLY-BROKEN state is obtained whenever one of the buyer or seller notification status is SUCCESS. The DOUBLY-BROKEN state is obtained whenever neither buyer nor seller notification status is SUCCESS. Equivalently, one could transitively map the UNKNOWN state to the FAILURE state and arrive at identical conclusions. This allows treating broken trades differently depending on host 20 failure-non-failure status since this information can be recovered by examining details of the match log 200. The above protocol preferably covers all possible combinations of buyer and seller match acknowledgement states under all conditions of host 20 operation and failure, thus proving the correct operation of the match acknowledgement protocol.

Referring now to FIG. 25, the field MATCH STATUS is a summary of the current settings of the BUYER and SELLER NOTIFICATION STATUS. MATCH STATUS is preferably computed according to the logic table shown by way of example, in Fig. 25. Since BUYER NOTIFICATION STATUS and SELLER NOTIFICATION STATUS each have three states, their combination preferably yields a total of nine composite states. Of these, only one state has both notification statuses set to SUCCESS; this is identified as the state MATCH STATUS = NON-BROKEN and shown as case 1 of Fig. 25. When a broken match is detected, an alarm is issued to an operator of the transaction desk 70. This person then preferably invokes manual recovery procedures to resolve any and all ambiguities about that match. This could involve one of several types of manual investigation and intervention depending on the type of match syndrome presented. In case of FIG. 25, where the match is NON-BROKEN, it is not reported to the transaction desk 70 as a broken trade.

If the match is SINGLY-BROKEN with explicit match notification FAILURE indications as in case 2 or 3 of Fig. 25, by way of example, then preferably the subscriber 24 whose notification status was FAILURE is contacted by telephone or other means to determine the cause of the problem. If they received the match notification in question, then they will say they received it, and they must accept the match as it stands. Thus, the match acknowledgement had been lost somewhere between the keystation 24 and the central system 20. If they did not receive the match notification in question, then they will say they did not receive it and they can accept the match as it stands or reject the match. Thus, the match notification was lost somewhere between the central system 20 and the keystation 24. If the subscriber 24 accepts the match, then the subscriber's notification status can be marked in some appropriate manner, such as "acknowledged via customer service intervention". If the subscriber 24 rejects the match, then the subscriber's match notification status can be appropriately marked as "rejected via customer service intervention", and you must then go to the market to lay-off the broken trade, assuming that is one of the rules under which the system operates. If the match is SINGLY-BROKEN with explicit match notification UNKNOWN indications as in case 4 or 5 of FIG. 25, then you preferably proceed as with case 2 or 3, recognizing that the broken trade was most likely caused by a host 20 failure. Since you do not know exactly the time of host 20 failure, it is not possible to know the true state of the subscriber 24 match notification. It is possible the match notification was never sent to the subscriber 24, or the match acknowledgement was never received by the host 20, or the host 20 failed before logging the match notification to the database 118. Combined failures are also possible. For example, the host 20 could send the match notification, then fail; yet the match notification could fail to arrive at the subscriber site 24 due to a network 22 failure. This much, at least is known: one subscriber 24 received a match notification and the database 118 recorded the match acknowledgement while the other subscriber 24 may not have received anything. Recovery operations can proceed as with case 2 or 3 above. If the match is DOUBLY-BROKEN, with explicit match notification FAILURE indications as in case 6 of FIG. 25, then a network 22 failure is the most likely cause since a host 20 failure is ruled out. The investigation should proceed to determine if one or both subscribers 24 received match notifications. If one subscriber 24 received a match notification and the other did not then you should preferably proceed as with case 2 or 3. If neither subscriber 24 received a match notification, then the transaction desk 70 can ask them whether or not they wish to consummate the match. If both subscribers 24 accept the match, then each subscriber's notification status can be appropriately marked as "acknowledged via customer service intervention". If both subscribers 24 reject the match, then each subscriber's match notification status can be appropriately marked as "rejected via customer service intervention". If the match is DOUBLY-BROKEN, with a mixture of match notification UNKNOWN and FAILURE indications as in case 7, 8 or 9 of FIG. 25, then a host 20 failure is the most likely cause. The investigation can then preferably proceed as with case 6 above.

Referring now to FIGS. 26-33, the processing of trades using the transaction desks 70 shall be described. FIG. 26 preferably shows the major steps in the processing of various trade and nontrade-types of transactions using the transaction desk 70. FIG. 26 will be used to discuss the details of control and data flow for a set of transactions in both normal and failure modes of the system of the present invention. FIG. 26 describes the various steps in trading with T-desk type arbitration, with Step 0 describing the non-trade bid/offer transaction, Step 1 describing the single-trade bid/offer transaction, Step 2 describing the match notification acknowledgement transaction, and Step 3 describing the host match notification time-expiration transaction. For this discussion, I shall assume there are three keystations 24 connected to the system labeled $KS_a$, $KS_b$, $KS_c$ and representing the traders of three different subscribers A, B, C. I also assume that there are three transaction desks 70 labeled $Tdesk_1$, $Tdesk_2$, $Tdesk_3$. I further assume that one instrument (IxM) is available for trading among all three subscribers 24 and that all subscribers 24 have credit with each other. Trading starts with an empty book. The subscribers 24 submit a total of four transactions $x_{tem}$ = $X_1$, $X_2$, $X_3$, $X_4$ at the same quote (price) in the order shown, by way of example, in FIG. 27. If we look at the sequence of transactions in the order given in the example of FIG. 27 and follow their progress through the system from the point of origin to the final effect, this would give a view of the data flow.

If, however, we change our viewpoint and discuss the processing of the same set of transactions as seen by each subsystem, we would present pseudo-code and more detail on the flow of control. Now, by way of example, I shall proceed by examining the details of transaction processing for the four transactions $X_1$, $X_2$, $X_3$, $X_4$. In transaction 1 of FIG. 27, subscriber A submits a bod for Quantity = 15 with an All-Or-None restriction. Message processing is shown in "Step 0" of FIG. 26. The message processing is as follows:

Keystation $KS_a$ generates a bid message which is sent to the I/O server of the host 20; the I/O Server validates and logs the trigger and sends a trigger acknowledgement to the keystation 24; the I/O Server transports the bid to the Trading Server; the Trading Server positions the bid in the book 118 for that IxM and generates two messages: a directed message to $KS_1$ indicating successful positioning; and a broadcast message to all keystations 24 indicating the new status of the IxM. The I/O Server transports the Bid Positioned message to $KS_a$. Keystation $KS_a$ receives the Bid Positioned message and updates its local copy of subscriber A's "Open Positions". The I/O Server then broadcasts the IxM Update message to all keystations 24. All keystations 24 receive the IxM update message and update their local copies 110, 112 of the IxM summary data. The state of the book 118 after completion of $X_1$ is as illustrated in FIG. 28 in which the book 118 has no latent trade. Thus ends the processing of the transaction 1.

Transactions 2 and 3 of FIG. 27 preferably proceed in the same way as transaction 1, except for the differences in subscriber ids (B and C), types of entry, quantities, and attributes. After transaction $X_2$, we preferably have a book 118 with one bid and one offer as shown in FIG. 29. This book 118 cannot trade because both entries have all-or-none quantity restrictions and different quantities. The state of the book 118 just after transaction $X_3$ is as shown in FIG. 30. Again this book 118 contains no latent trades because entries (1) and (2) cannot trade because they have all-or-none quantity restrictions and different quantities and entry (3) preferably cannot trade with entry (2) because they belong to the same subscriber. Of course, if desired, such trading can be permitted. Thus, transactions 1, 2 and 3 are all trading-type transactions which do not result in a trade because of a blocking condition. "Step 0" of FIG. 26 preferably serves as the model for message processing for these types of transactions.

In transaction 4 of FIG. 27, subscriber C, submits a bid for Q = 15, unrestricted as to quantity. Message processing is preferably shown in "Step 1" of FIG. 26. If you look at the state of the book 118 just before the matching analysis step of $X_4$, you would see a book 118 with two bids and two offers such as shown in FIG. 31. This book 118 has a latent trade consisting of $X_4(T_1(M\ (A,_1^1\ B, 10), M(\ A,_2^1\ C, 5), M_3^1\ (B, C, 10)))$. Thus this is the first transaction of the four being described which is sent to the I/O server of the host 20. The I/O Server then validates and logs the trigger and sends a trigger acknowledgement to the keystation 24. The I/O Server also transports the bid to the Trading Server; the Trading Server positions the bid in the book 118 for that IxM and discovers that a trade is possible. The Trading Server 20 then constructs the Match Set for the trade and sends the set to the Trade Arbiter. The Trade Arbiter receives the Match Set from Trading Server 20 and starts a "Match Set Voting" timer which is preferably used to time-out unresponsive transaction desk 70 processes. The transaction desk 70 processes register the match set in their local databases and start a "Match Set Acknowledgement 'timer which is preferably used to time-out the match set if all subscriber-site 24 acknowledgements are not received in a fixed amount of time; each transaction desk 70 supplies a "Vote 1" back to the trade arbiter to positively acknowledge the registration of the match set; as was previously mentioned, the Trade Arbiter waits until a sufficient number of votes have been collected or the match set acknowledgement timer times out Assuming that sufficient votes are received to indicate commit, then the Trade Arbiter cancels the match set acknowledgement timer and sends a status message to the Trading Server indicating that a commit of the trade is allowable. The Trading Server receives the commit indication from the trade arbiter and generates several messages such as a directed message to $KS_c$ indicating successful positioning of the bid, directed messages to all subscribers or keystations 24 in the match set notifying them that their entries have been involved in a trade, with a total of 6 such match notifications being generated in the example of FIG. 32, and a broadcast message to all keystations 24 indicating the new status of the IxM (empty).

The I/O Server transports the Bid Positioned message to $KS_c$.

Keystation $KS_c$ receives the Bid Positioned message and updates its local copy of subscriber C's "Open Positions". The I/O Server preferably starts a "Match Acknowledgement" timer for each match notification shown in FIG. 32. This timer will preferably be used to time-out the individual subscriber-site match acknowledgements if they are not received in a fixed amount of time. The I/O Server preferably transports the Match Notifications to all keystations 24 in the match set. Each keystations 24 preferably receives its subset of Match Notifications and updates its local database 110, 112, 114, 116 to reflect the change to their open orders, and indicates in its log that a match has occurred. This is similar to the registration step performed by the transaction desk 70 as previously described.

Each keystation 24 must preferably subsequently send a match acknowledgement to the host 20 to positively acknowledge receipt of the match notification. The I/O Server preferably then broadcasts the IxM Update message to all keystations 24, which 110, 112 receive the IxM update message and update their local copies of the IxM summary data. This ends processing of Transaction 4.

Transaction 4 as shown in FIG. 32, preferably initiates the production of six more host 20 transactions $X_5$,...$X_{10}$ since each match notification must preferably be acknowledged with a distinct message back to the host 20. Assuming that the acknowledgements come back in the same order as the original notifications, the resulting match acknowledgements are shown in FIG. 33.

In FIG. 33, From: KS and Qualifications are used to associate the match acknowledgement with the original match notification. Of course, any identification scheme which accomplishes the association of match acknowledgement with the original notification could be used, such as original TSN, Trade Sequence Numbers, or From: Subscriber and Match Sequence Numbers shown in FIG. 33. Transactions 5-10 shown in FIG. 33 are called "match-acknowledgement transactions" and, preferably, all follow the general outline shown in "Step 3" of FIG. 26. Thus, Keystations $KS_x$ generates a match acknowledgement message which is sent to the I/O server of the host 20; the I/O Server validates the match acknowledgement message, converts it to an internal trigger (no acknowledgement back to the keystation 24 is required), and logs the trigger; the I/O Server cancels the match acknowledgement timer for the associated match notification; the I/O Server transports the match acknowledgement timer for the associated match notification; the I/O Server transports the match acknowledgement of the Trading Server; the Trading Server starts a transaction, updates the Match Log to indicated that the given match $M_k^{ij}$ (x,y) has been acknowledged and commits the transaction; the Trading Server forwards the match acknowledgement to the trade arbiter; the Trade Arbiter broadcasts the match acknowledgement to all active transaction desks 70; and the transaction desks 70 receive the client-site match acknowledgement and update their copy of the match set to register the acknowledgement. If all matches in the match set have been marked as acknowledged, then the "Match Set Acknowledgement" timer is preferably cancelled and the match set is de-registered. In this example, $X_5$, $X_6$, $X_7$, $X_8$, and $X_9$, will find that some elements of the match set have not been acknowledged, so the timer will be in effect. $X_{10}$ will find that all acknowledgements have arrived, the timer will be cancelled and the match set will be de-registered. This ends the processing of Transactions 5-10.

The transaction processing load presented by transactions 5-10 is non-neglible since each one involves a per-match transaction against the recoverable database and each transaction performs relatively little work. If desired, the impact of these transactions may be reduced in the following manner. In general, a transaction which resulted in m matches would result in 2m match notification messages, 2m match acknowledgement messages, and 2m match acknowledgement transactions. If the host 20 were processing an average of X trading transactions per second and p of these resulted in trades then the number of match acknowledgement transactions would be 2pXm [$sec^{-1}$]. In normal operation, all 2m match acknowledgement messages would arrive back at the host 20 at about the same time, approximately one network 22 round-trip time ( $T_{round\text{-}trip}$) after they were sent. One could therefore simply buffer all match acknowledgement messages from a given transaction for some fixed length of time, say 2 $^{T}$round-trip or 3 $^{T}$round-trip, and then update all match log 200 entries for these match acknowledgements in a single transaction against the database. Here, the reduction in transaction processing cost would be proportional to 2m, since roughly 2m MATCH-ACK updates would be committed per transaction and the rate of MATCH-ACK transactions would be reduced to pX [$sec^{-1}$]. If desired, one could buffer all match acknowledgement messages for all transactions for some fixed length of time, or until some pre-designated maximum number of match acknowledgements had arrived, and then update the database. This procedure would give even more reduction in transaction processing cost as compared to a per transaction MATCH-ACK updating procedure since the rate of MATCH-ACK transactions is essentially constant. The system would actually gain in efficiency as the load increased, since as more matches were committed per unit time, more MATCH-ACK transactions would be collapsed into a single transaction with essentially constant cost.

The above example may also be described by describing the process of transactions from the perspective of the individual subsystems involved. This perspective would more clearly show the functions performed by the different subsystems and show how the combined effect of all subsystems implements the required level of fault tolerance and reliability in the system of the present invention. In the following description, a combination of pseudo-code and a narrative description will be used. The pseudo-code is an informal programming language and is not intended to be compilable. The pseudo-code is annotated with comments beginning with a double dash (--); these comments provide additional explanation or cross references to the step numbers of FIG. 26, starting with a description of keystation 24 processing which treats only production of triggers and receipt of messages from the network 22. The appropriate pseudo-code is as follows:

```
-- [Step x] Transactions:  Trigger Production, Message
                           Processing
--          Entity      :  Keystation

loop

Wait for User Input or Message from Network

when User Input =>
    Construct a Trigger Message -- BID/OFFER/HIT/TAKE etc.
    Send Trigger (via Network) to Host

when Message from Network =>
    Process Message
    Log Message
    if Message requires ACK then
        Send Ack (via Network) to Host
    end if

end loop
```

Next, referring to the host 20 components namely, the Trading Server, Trade Arbiter, and I/O Server, the component pseudo-code is as follows starting with the I/O Server first and describing the processing performed for all inputs, outputs and timers, with this model being a good overview of the processing for all transactions:

```
-- [Step x] Transactions:  Trigger Input,
--                      :  Directed Message Output,
--                      :  Broadcast Message Output
--              Entity  :  I/O Server

loop

Wait for message from Network
      or message from Trading Server
      or              Timer Expiration

when Message from Network =>
    Assign Transaction Number
    Log the Trigger
    if Message requires ACK then
    Validate Trigger

    if Valid Trigger then
         Send Command Ack (via Network) to Keystation
         Route Trigger to Trading Server
    end if

when Message from Trading Server =>
    if Directed Message then
         Write Directed Log
         if Message Requires ACK then
              Start Timer
         end if
         Send Message to Keystation
    end if

    if Broadcast Message then
         Write Broadcast Log
         Send Message to all Keystations
    end if


 when Timer Expiration=>
     Determine Reason for Expiration
     Generate Appropriate Internal Trigger
     Assign Transaction Number
     Log the Trigger
     Route Trigger to Appropriate Server

 end loop
```

In the cases of Match Notification Acknowledgement and Match Notification Timer expiration, we can be more specific. If a match notification is received at the I/O Server before expiration of the timer, then the timer is cancelled, an internal trigger is generated indicating Match Notification Success, and this trigger is forwarded to the Trading Server, such as illustrated below:

```
-- [Step 2] Transaction:  Match Notification Acknowledgement
--            Entity     :  I/O Server

Receive Client (Match Notification Acknowledgement)
Cancel Client Match Acknowledgement Timer
Generate Internal Trigger
Assign Transaction Number
Log the Trigger
Send Trading Server (Match Acknowledgement Trigger)
```

If however, a match notification is not received at the I/O Server before expiration of the timer, then a match notification failure trigger is generated as shown below:

```
-- [Step 3] Transaction:  Match Notification Timer Expiration
--            Entity     :  I/O Server

    -- A Client has not ACKed a message that required an ACK.
    -- Either the client failed, or a network link failed.

Match Notification Timer Expires
Generate Internal Trigger
Assign Transaction Number
Log the Trigger
Send Trading Server (Match Acknowledgement Failure)
```

The next host 20 component is the Trading Server, with the below example being slanted toward processing of transaction 4, and transactions 1-3, following a model which is simply a subset of the processing for transaction 4 and, thus, is not being repeated here in the below example:

```
-- [Step 1] Transaction:  Trade Origination
--          Entities   :  Trading Server

Receive Client (Trigger) -- BID or OFFER
Begin Transaction

    [Step 1.1]
    Begin Trade
    Construct Match Set
    Send Trade Arbiter (Match Set)
    Receive Trade Arbiter (Status)
    if Status = Success then
         loop over all Matches in Match Set
              Mark Both client Acks as Unknown
         end loop
         Safe Store Match Set
         Commit Trade
    else
         Rollback Trade
    end it
    End Trade

    [Step 1.2]
    if Status = Success then
         loop over all Matches in Match Set
              Start Client Match Notification Timer
              Send client Match Notification
         end loop
    else
         do nothing
    end it

    End Transaction
```

With respect to the general flow of transactions 5-10 in the Trading Server, these transactions involve the processing of match notification acknowledgements for client sites 26 which corresponds to "Step 2" of FIG. 26 as shown below:

```
-- [Step 2] Transaction:  Match Acknowledgement Success
--          Variables  :  Client C, Transaction X, Trade T,
                          Match M
--          Entities   :  Trading Server

Receive Client (Match Acknowledgement Success)
Begin Transaction
    Locate Match X (T(M)) within Match Log
    Mark Client C Ack of Match Set M as Client-ACKed
    Commit Transaction
    Send Trade Arbiter (Match Acknowledgement)
End Transaction
```

If a match notification is not received at the I/O Server before expiration of the timer, then a match notification failure trigger is generated and arrives at Trading Server and is processed as follows:

```
-- [Step 3] Transaction:  Match Acknowledgement Failure
--           Variables  :  Client C, Transaction X, Trade T,
                           Match M
--           Entities   :  Trading Server

Receive Client (Match Acknowledgement Failure)
     -- Note:  Failure is indicated by timer expiration
     -- or network notification of loss of connection.
Begin Transaction
     Locate Match X(T(M)) within Match Log



     Mark Client C Ack of Match Set M as Client-NACKed
     Commit Transaction
     Send Trade Arbiter (Match Acknowledgement)
End Transaction
```

With respect to the Trade Arbiter, it is preferably only involved in transactions which result in a trade or process a match acknowledgement success/failure trigger. In general, the Trade Arbiter acts as an "I/O Server" for transaction desk 70 processes. In a trade transaction, the Trade Arbiter broadcasts match sets to all available transaction desk 70 processes and waits for the votes to come in as follows:

```
-- [Step 1] Transaction:  Broadcast Match Sets to Trade Judges
--          Entity      :  Trade Arbiter

Receive Trading Server (Match Set)
Start Judgment Timer
Votes = 0
Minimum Votes = Weighting (Current Judges)

-- Broadcast the Match Set to all Judges
for I in Current Judges
loop Current Judges
     Send Trade Judge (I) (Match Set)
end loop

-- Wait for results to arrive
while Judgment Timer not Expired
     and Votes   Minimum votes
loop
     Receive Trade Judge (Vote)
     Votes = Votes + Vote
end loop

-- Decide if results indicate Success/Abort
if Votes >= Minimum Votes then
     Send Trading Server (Success)
else
     Send Trading Server (Abort)
end it
```

When match acknowledgements come back, the Trade Arbiter preferably broadcasts the acknowledgements to all transaction desk 70 processes so that they can mark ACKs or NACKs on their local copies of the match set as shown below:

```
-- [Step 2] Transaction:  Broadcast Match Acknowledgement Status
--          Entity     :  Trade Arbiter

Receiving Trading Server (Match Acknowledgement (Status))
for I in CUrrent Judges
loop Current Judges
    Send Trade Judge (Match Acknowledgement (Status))
end loop
```

As was previously mentioned, transaction desks or computers 70, casting votes which ultimately decide whether a trade commits or aborts. During the trade origination part, the transaction desk 70 simply records the data being "judged" nd cast their vote. They each start a timer which determines the maximum length of time to wait for Match Acknowledgement Status to come back from the host 20 such as shown below:

```
-- [Step 1] Transaction:  Register a Match Set for Tracking
--          Entity     :  Transaction Desk (or Trade Judge)

Receive Trade Arbiter (Match Set)
Safe Store Match Set
Send Trade Arbiter (Vote := 1)
Start Match Acknowledgement Timer
```

During steps 2 and 3 each transaction desk 70 preferably collects match Acknowledgement Status messages from the host 20 and marks the matches appropriately. If all matches become marked, then we can have an early determination of Match Set success or failure, can cancel the timer, and can inform the trade desk 70 person of broken trades, if any such as shown below:

```
-- [Step 2, 3] Transaction:  Match Acknowledgement
                             Success/Failure
--             Entity     :  Transaction Desk (or Trade Judge)

Receive Trade Arbiter (Match Acknowledgement)
Locate Match M within Match Set
Mark Client C of Match M as Client-ACKed or NAKed
if all Clients of Match Set have been marked then

    Cancel Match Acknowledgement Timer

    -- Look for Broken Trades
    Scan Match Set for missing ACKs or explicit NAKs
if Broken Trade then
    Notify (with Alarm) T-Desk Personnel of Broken Trade
    Identify Clients with missing ACKs or explicit NAKs
end if

end if
```

Thus, by utilizing the risk control distributed anonymous matching system of the present invention, risks are minimized as to losses due to broken trades by utilizing a plurality of isolated computers to monitor each trade and vote on its completion, by monitoring heartbeat messages to minimize the incidence of broken trades, and by positive match acknowledgements, with broken trade alerts being provided where appropriate so that all parties can be made aware of a broken trade and correct the situation.

## Claims

1. A risk control matching system for trading instruments in which bids are automatically matched against offers for given trading instruments for automatically providing matching transactions in order to complete trades for said given trading instruments, said system comprising a host book database comprising all of the active bids and offers in the system by trading instrument; a transaction originating keystation means for providing a bid on a given trading instrument to said system for providing a potential matching transaction, a counterparty keystation means for providing an offer on said given trading instrument involved in said potential matching transaction; network means for interconnecting said host computer means, said transaction originating keystation means and said counterparty keystation means in said system for enabling data communications therebetween; and a plurality of matching transaction by said host computer means for detecting the occurrence of said potential matching transaction by said host computer means, each of said transaction detection means having an associated database for storing data with respect to said potential matching transaction, said host computer means further comprising means for processing said potential matching transactions for a given trading instrument for providing a match indication signal to said plurality of transaction detecting means, said transaction detecting means comprising means responsive to said match indication signal for detecting the occurrence of said potential matching transaction at said host computer means, said transaction detecting means further comprising means for providing an acknowledgement signal to said host computer means in response to receipt of said match indication signal and for recording said potential matching transaction in said transaction detecting means associated data base, said host computer means further comprising means responsive to receipt of a predetermined plurality of said acknowledgement signals from said transaction detecting means for updating said host book data base based on said matching transaction and for providing a directed message to said transaction originating keystation means and said counterparty keystation means acknowledging the occurrence of said matching transaction; whereby broken trades may be readily identified with a minimization of risk to the parties to said potential matching transaction.

2. A risk control matching system in accordance with Claim 1 wherein said transaction originating keystation means and said counterparty keystation means comprise means for providing directed messages to said host computer means, corresponding to said bid and said offer, respectively, said directed messages updating said host book, said transaction originating keystation means and said counterparty keystation means comprising means for providing a positive match acknowledgement signal to said host computer means in response to receipt of a match notification signal from said host computer means, lack of said receipt of said match acknowledgement signal from either of said keystation means causing said host computer means to detect a broken trade.

3. A risk control matching system in accordance with Claim 1 or Claim 2 wherein each of said keystation means comprises means for providing an application based heartbeat signal to said host computer means for enabling rapid detection of keystation failure, said host computer means further comprising means for cancelling all bids and offers associated with any keystation means from which said heartbeat signal is not detected in a predetermined detection interval.

4. A risk control matching system in accordance with Claim 3 wherein said application based heartbeat signal comprises a data message or a no data heartbeat message provided in a predetermined heartbeat interval less than said detection interval.

5. A risk control matching system as claimed in any one of Claims 1 to 4 wherein said predetermined detection interval is at value high enough to make transients but still low enough to minimize system vulnerability to broken trades.

6. A risk control matching system as claimed in any one of Claims 1 to 5 wherein said predetermined detection interval comprises about an 8 second detection time.

7. A risk control matching system as claimed in any one of Claims 1 to 6 wherein at least two of said plurality of matching transaction detection means are substantially collocated and at least one other of said plurality is remotely located from said other two.

8. A risk control matching system as claimed in any one of Claims 1 to 7 wherein said transaction originating keystation means and said counterparty keystation means comprise means for providing directed messages to said host computer means, corresponding to said bid and said offer, respectively, said directed messages updating said host book, said transaction originating keystation means and said counterparty keystation means comprising means for providing a positive match acknowledgment signal to said host computer means in response to receipt of a match notification signal from said host computer means, lack of said receipt of said match acknowledgment signal from either of said keystations means causing said host computer means to detect a broken trade.

9. A risk control matching system as claimed in any one of Claims 1 to 8 wherein each of said associated keystations means further comprises an order book, said order book comprising the orders being maintained by said associated keystation means in said system, said order books being updatable in response to directed messages from said host computer means.

10. A risk control matching system as claimed in any one of Claims 1 to 9 wherein said given trading instruments comprise foreign exchange currencies.

FIG. 1

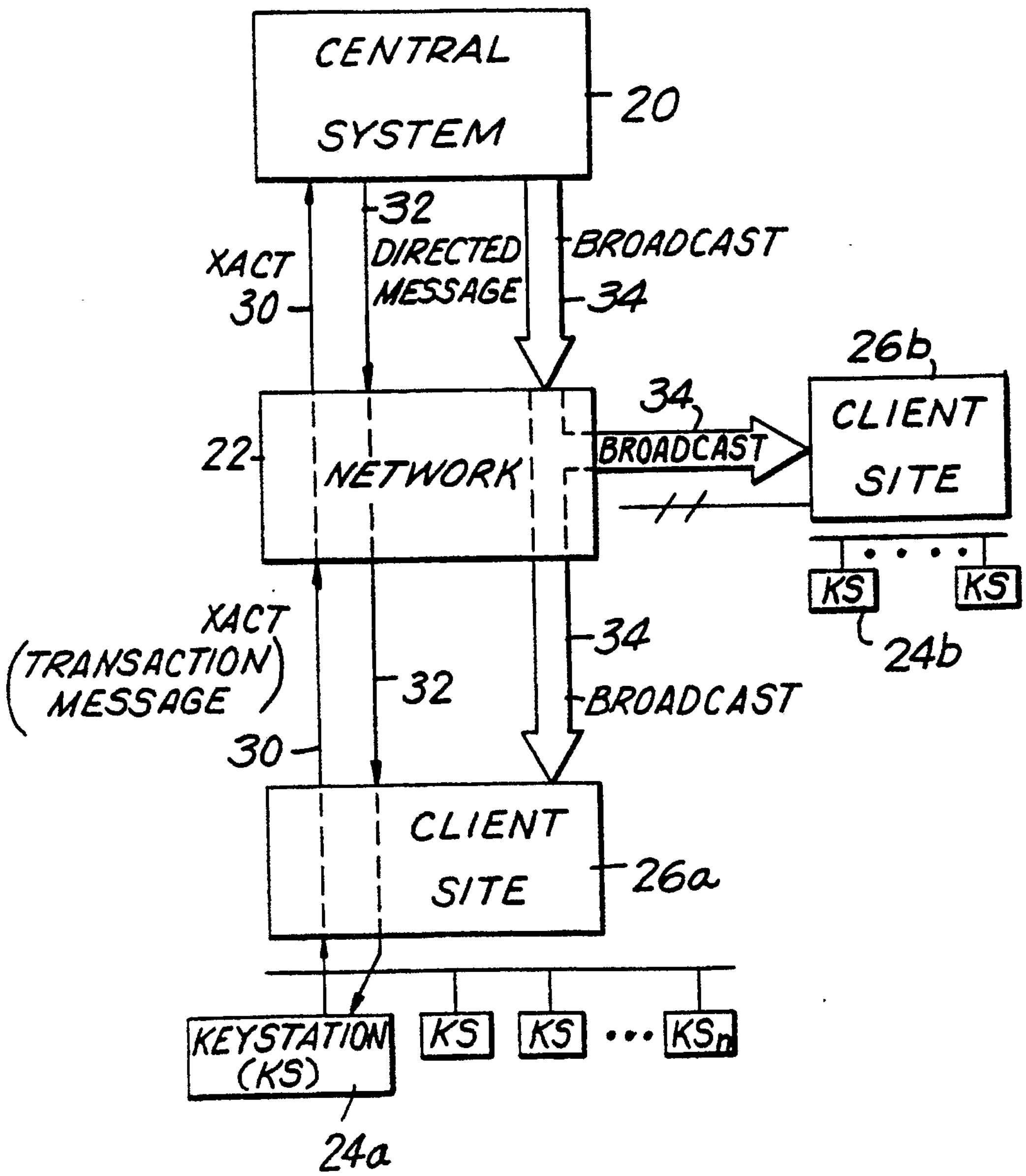
CENTRAL SYSTEM
20
XACT
30
32
DIRECTED MESSAGE
BROADCAST
34
26b
34
BROADCAST
CLIENT SITE
22
NETWORK
KS
KS
24b
XACT (TRANSACTION MESSAGE)
34
32
BROADCAST
30
CLIENT SITE
26a
KEYSTATION (KS)
KS
KS
KSn
24a

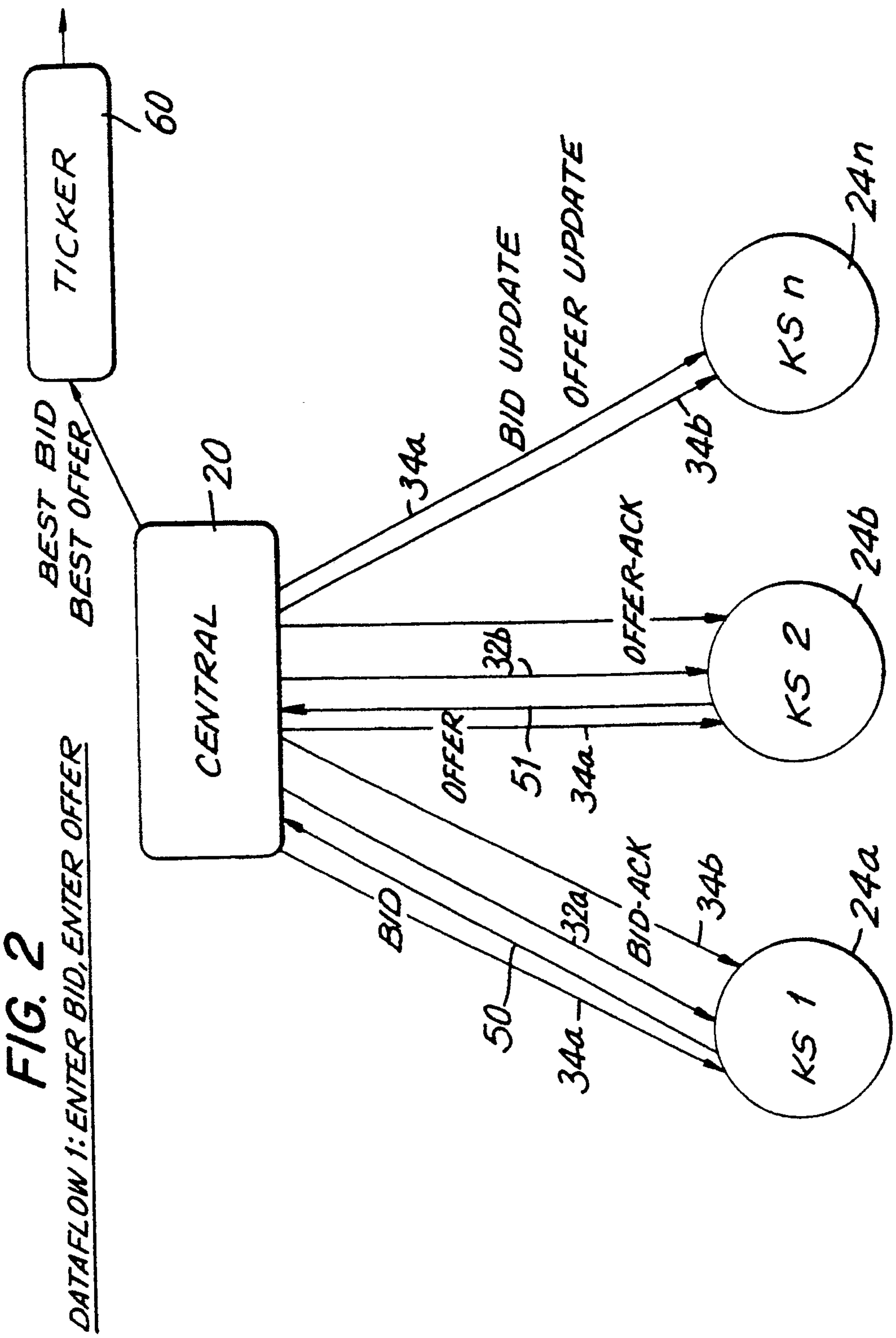


FIG. 2

DATAFLOW 1: ENTER BID, ENTER OFFER

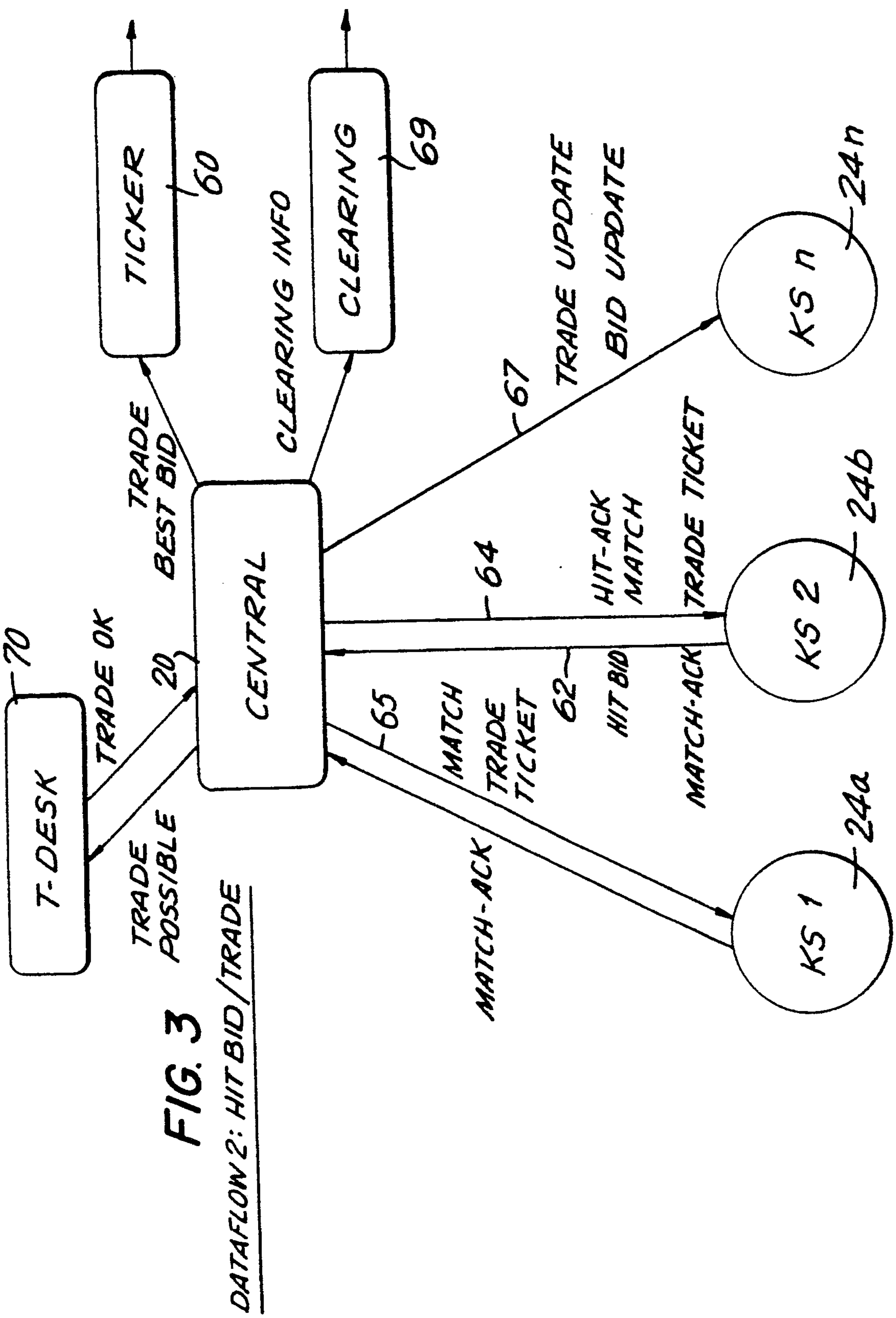


FIG. 3

DATAFLOW 2: HIT BID/TRADE

FIG. 4

CENTRAL STATION BOOK

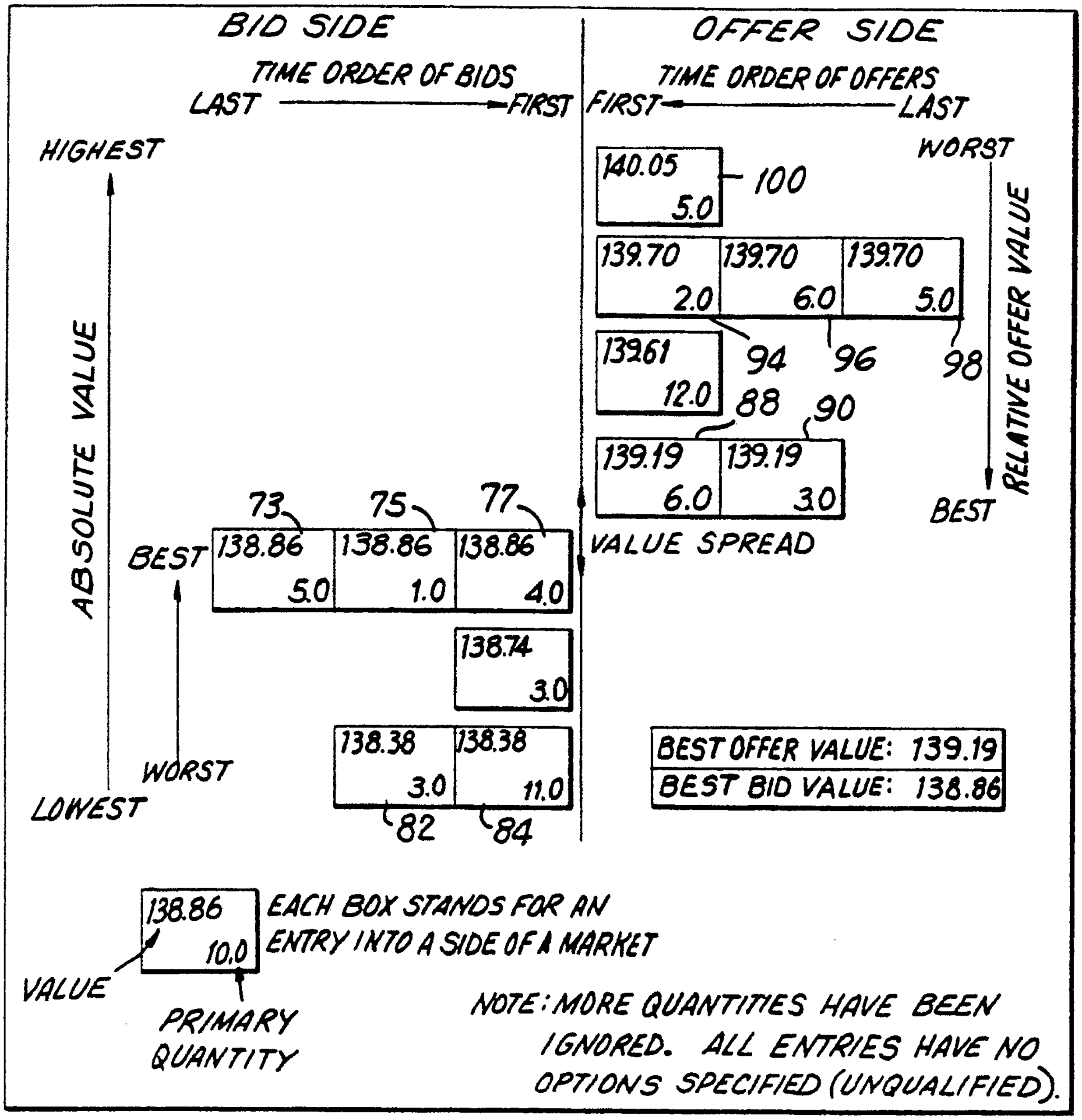

FIG. 5

KEYSTATION BOOK

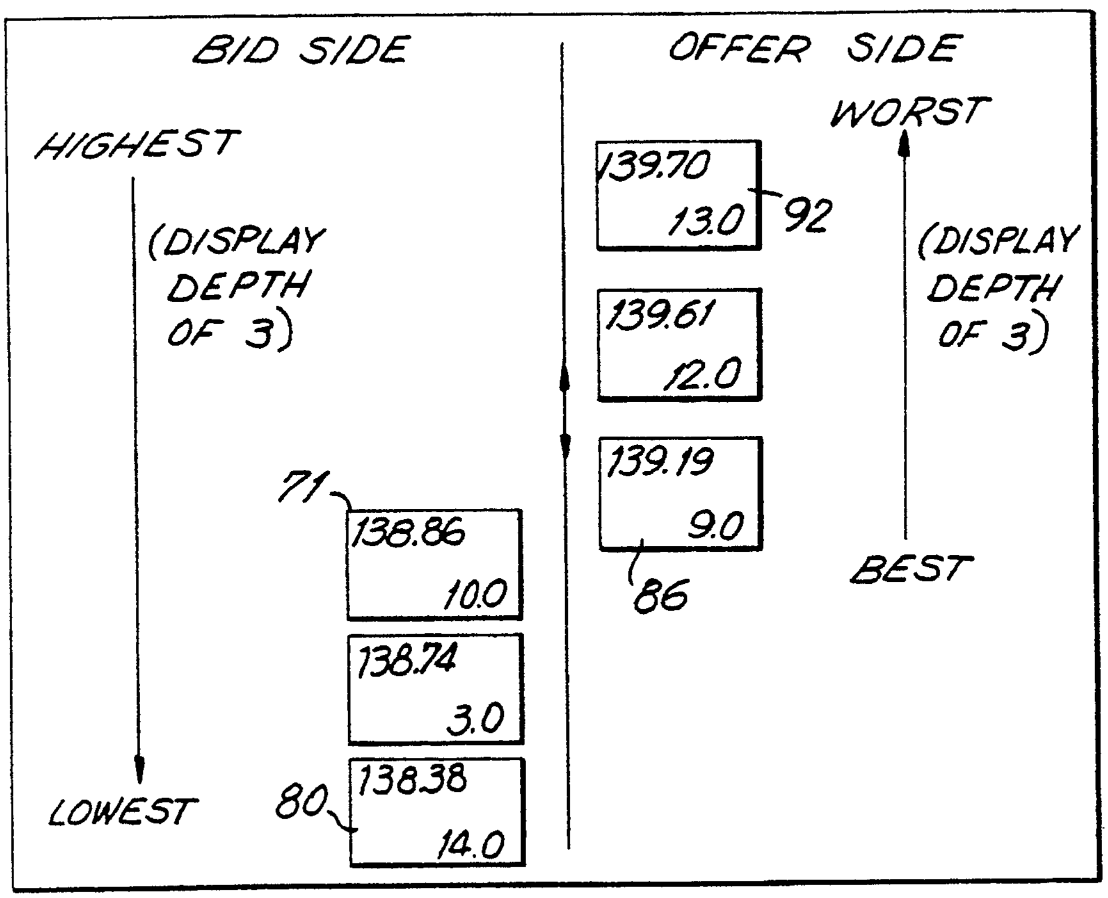

FIG. 6

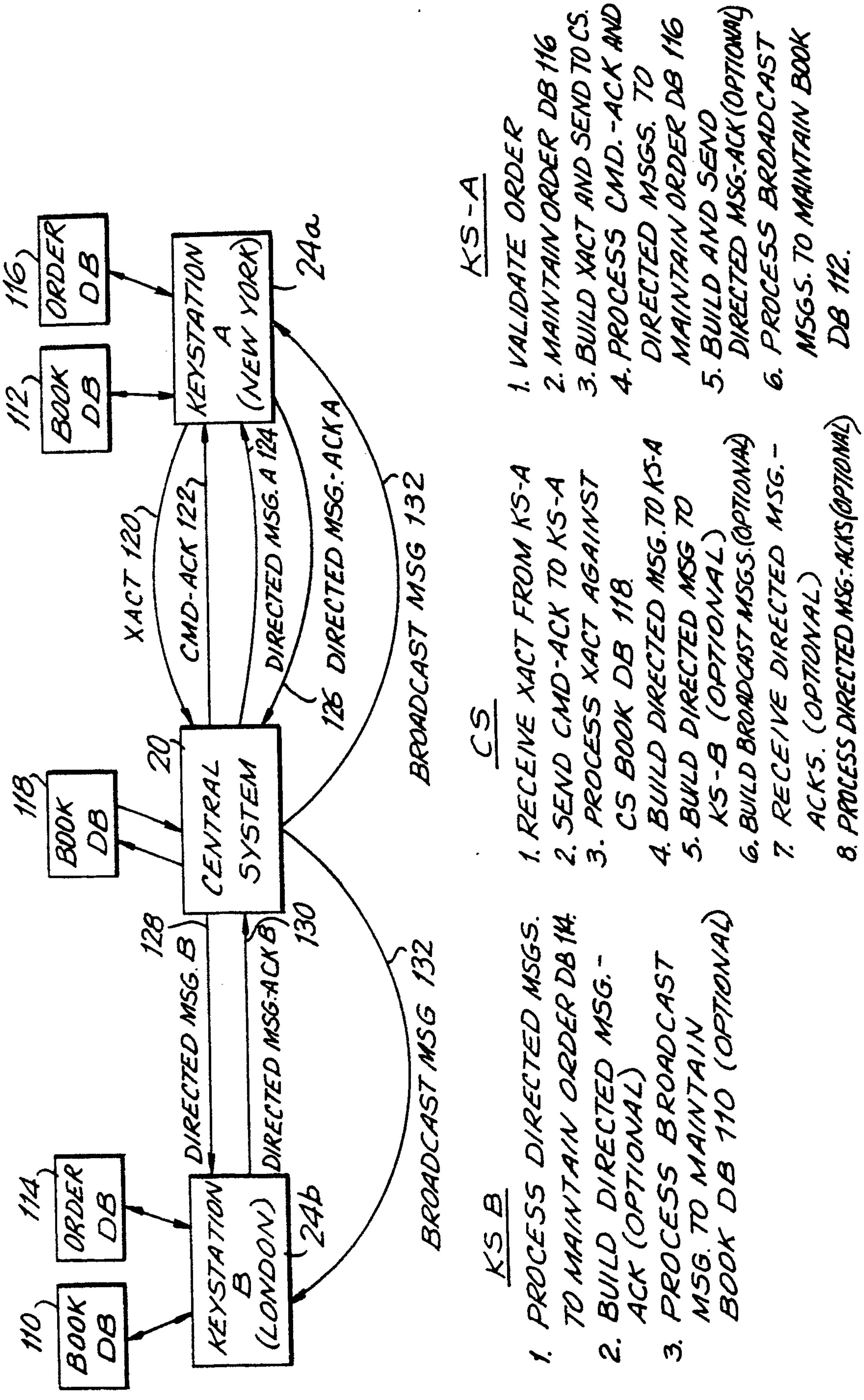

110
BOOK DB
114
ORDER DB
KEYSTATION B (LONDON)
24b
DIRECTED MSG. B
128
DIRECTED MSG-ACK B
130
BROADCAST MSG 132
118
BOOK DB
20
CENTRAL SYSTEM
XACT 120
CMD-ACK 122
DIRECTED MSG. A 124
126
DIRECTED MSG.-ACK A
BROADCAST MSG 132
112
BOOK DB
116
ORDER DB
KEYSTATION A (NEW YORK)
24a
KS B
1. PROCESS DIRECTED MSGS. TO MAINTAIN ORDER DB 114.
2. BUILD DIRECTED MSG.-ACK (OPTIONAL)
3. PROCESS BROADCAST MSG. TO MAINTAIN BOOK DB 110 (OPTIONAL)
CS
1. RECEIVE XACT FROM KS-A
2. SEND CMD-ACK TO KS-A
3. PROCESS XACT AGAINST CS BOOK DB 118.
4. BUILD DIRECTED MSG. TO KS-A
5. BUILD DIRECTED MSG TO KS-B (OPTIONAL)
6. BUILD BROADCAST MSGS. (OPTIONAL)
7. RECEIVE DIRECTED MSG.-ACKS. (OPTIONAL)
8. PROCESS DIRECTED MSG-ACKS (OPTIONAL)
KS-A
1. VALIDATE ORDER
2. MAINTAIN ORDER DB 116
3. BUILD XACT AND SEND TO CS.
4. PROCESS CMD.-ACK AND DIRECTED MSGS. TO MAINTAIN ORDER DB 116
5. BUILD AND SEND DIRECTED MSG-ACK (OPTIONAL)
6. PROCESS BROADCAST MSGS. TO MAINTAIN BOOK DB 112.

## FIG. 7

| FIELD | BYTE | FIELD NAME | SIZE | TYPE |
|---|---|---|---|---|
| 1 | 0 | PROTOCOL TYPE | 01 | BYTE |
| 2 | 1 | SERVICE ID | 01 | BYTE |
| 3 | 2 | TIME STAMP | 04 | TIME TYPE |
| 4 | 6 | MESSAGE CLASS | 01 | ENUM |
| 5 | 7 | KEYSTATION ADDRESS | 04 | ADDRESS TYPE |
| 6 | 11 | MSG. SEQUENCE NUMBER | 02 | WORD |

## FIG. 8

| | | | | |
|---|---|---|---|---|
| 7 | 13 | MESSAGE TYPE | 01 | ENUM |
| 8 | 14 | MESSAGE GROUP | 01 | ENUM |
| 9 | 15 | HOST XACT NUMBER | 04 | LONGWORD |
| 10 | 19 | I x M TOKEN | 04 | LONG WORD |
| 11 | 23 | UPDATE IDENTIFIER | 01 | ENUM |
| 12 | 24 | I x M SEQUENCE NUMBER | 01 | BYTE |
| 13 | 25 | RFR STATE | 01 | ENUM |
| 14 | 26 | TRADE WORKUP QUANTITY | 04 | QUANTITY TYPE |
| 15 | 30 | BLOCK LIST SIZE | 01 | BYTE |
| 16 | 31 | NUMBER OF HIGHS | 01 | BYTE |
| 17 | 32 | NUMBER OF LOWS | 01 | BYTE |
| 18 | 33 | NUMBER OF TRADES | 01 | BYTE |
| 19 | 34 | NUMBER OF OPERATIONS | 01 | BYTE |

## FIG. 9

HIGH BLOCK

| FIELD | BYTE | FIELD NAME | SIZE | TYPE |
|---|---|---|---|---|
| 1 | 0 | HIGH QUOTE | 08 | QUOTE TYPE |

FIG. 10

LOW BLOCK

| FIELD | BYTE | FIELD NAME | SIZE | TYPE |
|---|---|---|---|---|
| 1 | 0 | LOW QUOTE | 08 | QUOTE TYPE |

FIG. 11

TRADE BLOCK

| FIELD | BYTE | FIELD NAME | SIZE | TYPE |
|---|---|---|---|---|
| 1 | 0 | TRADE QUOTE | 08 | QUOTE TYPE |
| 2 | 8 | TRADE QUANTITY | 04 | QUANTITY TYPE |

FIG. 12

OPERATION BLOCK

| FIELD | BYTE | FIELD NAME | SIZE | TYPE |
|---|---|---|---|---|
| 1 | 0 | OPERATION CODE | 01 | ENUM |
| 2 | 1 | INDEX | 01 | BYTE |
| 3 | 2 | ENTRY TYPE | 01 | ENUM |
| 4 | 3 | ENTRY QUOTE | 08 | QUOTE TYPE |
| 5 | 11 | QUANTITY | 04 | QUANTITY TYPE |
| 6 | 15 | QUANTITY ATTRIBUTE | 01 | ENUM |

FIG. 13

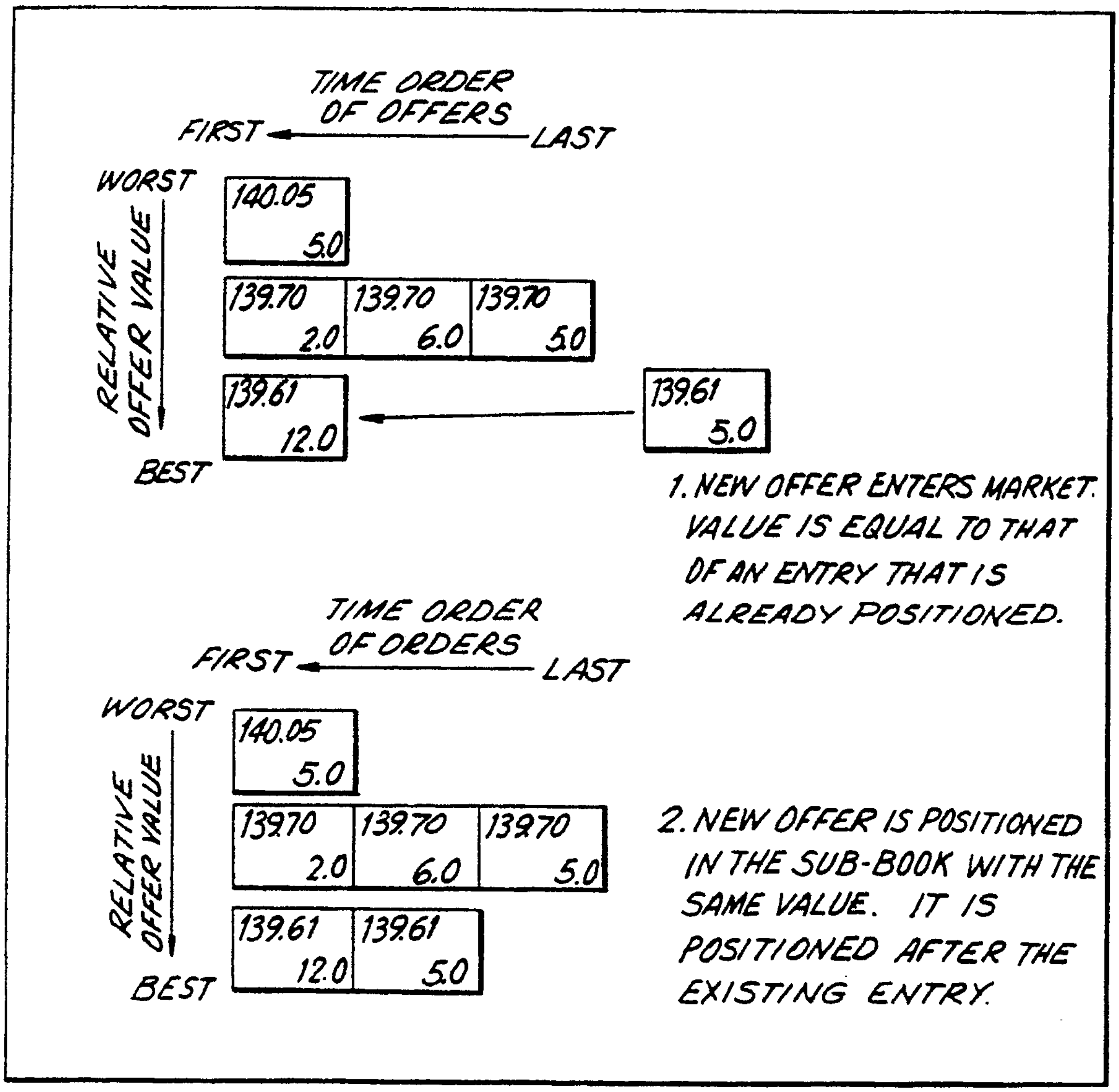
TIME ORDER
OF OFFERS
FIRST
LAST
WORST
RELATIVE
OFFER VALUE
BEST
140.05
5.0
139.70
2.0
139.70
6.0
139.70
5.0
139.61
12.0
139.61
5.0
1. NEW OFFER ENTERS MARKET. VALUE IS EQUAL TO THAT OF AN ENTRY THAT IS ALREADY POSITIONED.
TIME ORDER
OF ORDERS
FIRST
LAST
WORST
RELATIVE
OFFER VALUE
BEST
140.05
5.0
139.70
2.0
139.70
6.0
139.70
5.0
139.61
12.0
139.61
5.0
2. NEW OFFER IS POSITIONED IN THE SUB-BOOK WITH THE SAME VALUE. IT IS POSITIONED AFTER THE EXISTING ENTRY.

FIG. 14

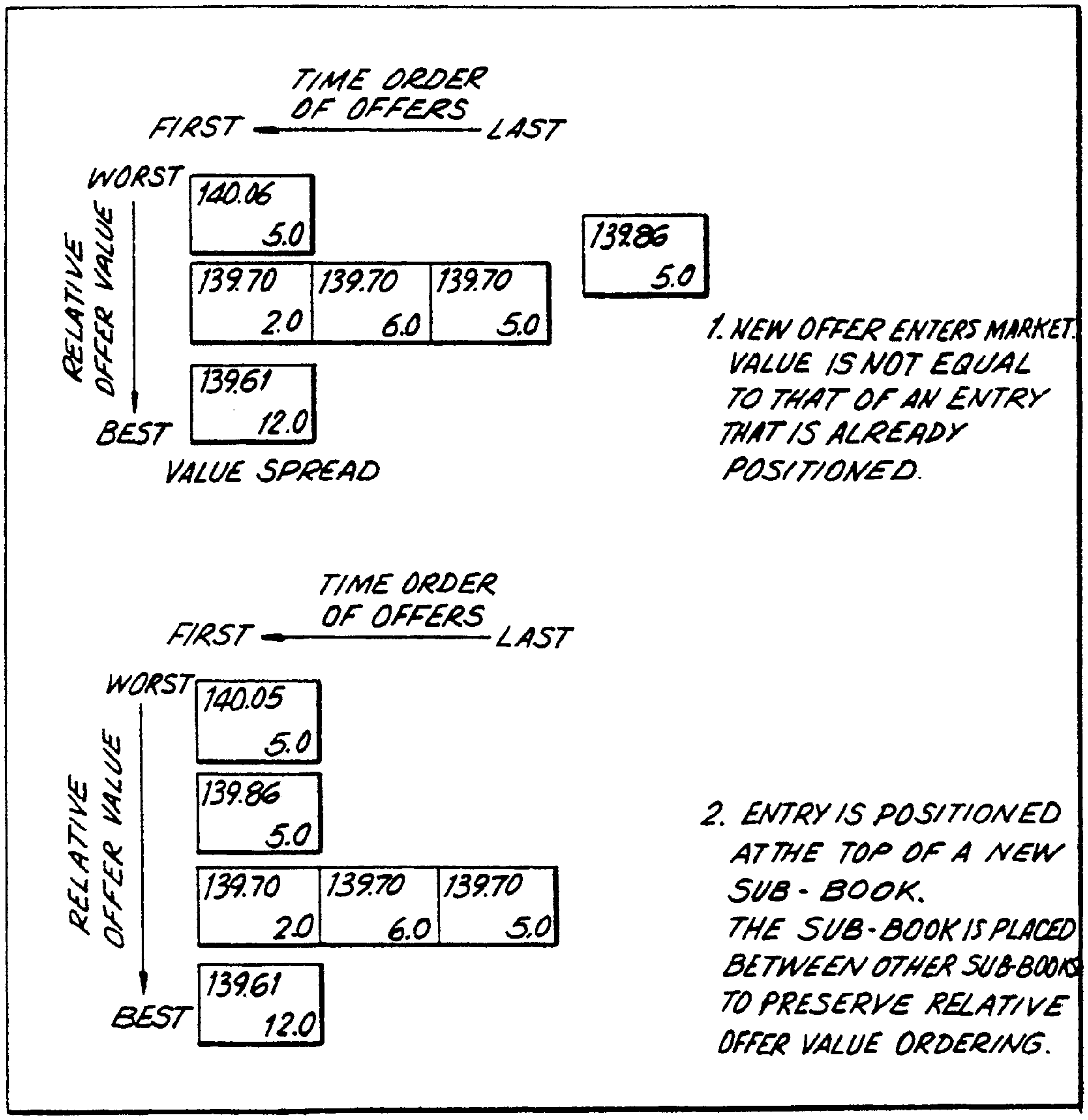
TIME ORDER OF OFFERS
FIRST
LAST
WORST
RELATIVE OFFER VALUE
BEST
140.06
5.0
139.70
2.0
139.70
6.0
139.70
5.0
139.61
12.0
139.86
5.0
VALUE SPREAD
1. NEW OFFER ENTERS MARKET. VALUE IS NOT EQUAL TO THAT OF AN ENTRY THAT IS ALREADY POSITIONED.
TIME ORDER OF OFFERS
FIRST
LAST
WORST
RELATIVE OFFER VALUE
BEST
140.05
5.0
139.86
5.0
139.70
2.0
139.70
6.0
139.70
5.0
139.61
12.0
2. ENTRY IS POSITIONED AT THE TOP OF A NEW SUB-BOOK. THE SUB-BOOK IS PLACED BETWEEN OTHER SUB-BOOKS TO PRESERVE RELATIVE OFFER VALUE ORDERING.

FIG. 15

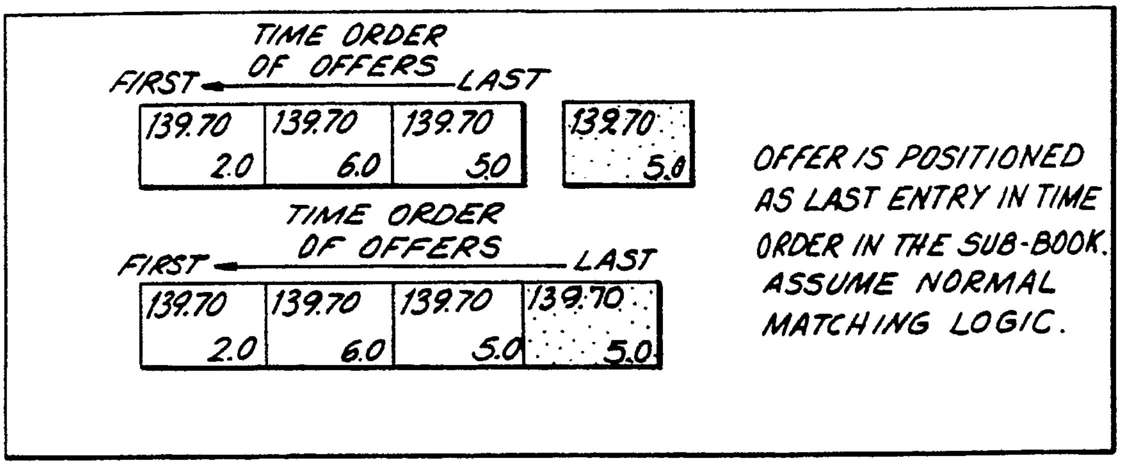
TIME ORDER OF OFFERS
FIRST
LAST
139.70 2.0
139.70 6.0
139.70 5.0
139.70 5.0
TIME ORDER OF OFFERS
FIRST
LAST
139.70 2.0
139.70 6.0
139.70 5.0
139.70 5.0
OFFER IS POSITIONED AS LAST ENTRY IN TIME ORDER IN THE SUB-BOOK. ASSUME NORMAL MATCHING LOGIC.

FIG. 16

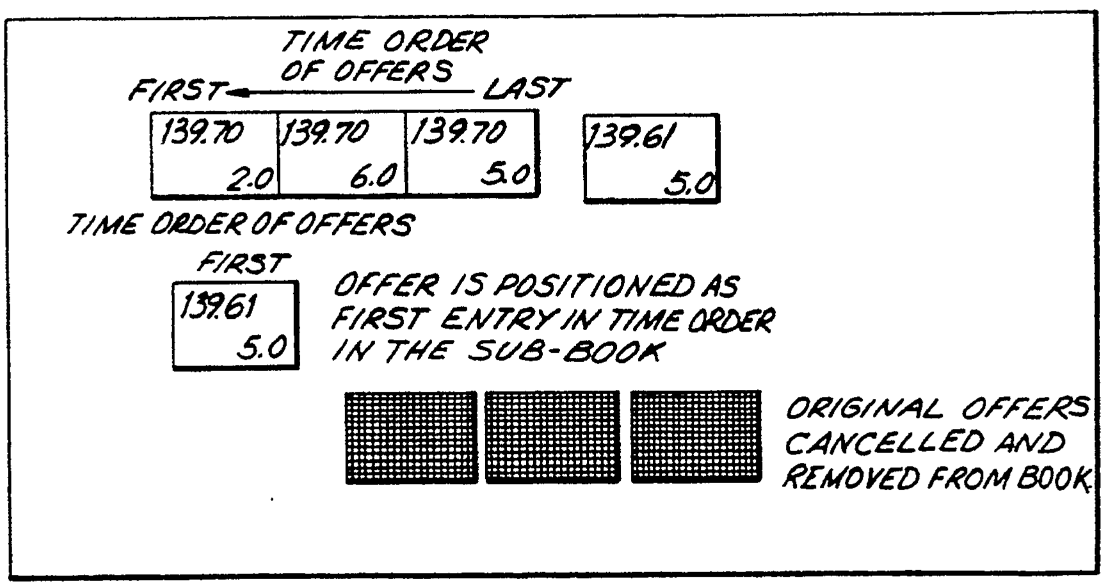
TIME ORDER OF OFFERS
FIRST
LAST
139.70 2.0
139.70 6.0
139.70 5.0
139.61 5.0
TIME ORDER OF OFFERS
FIRST
139.61 5.0
OFFER IS POSITIONED AS FIRST ENTRY IN TIME ORDER IN THE SUB-BOOK
ORIGINAL OFFERS CANCELLED AND REMOVED FROM BOOK

FIG. 17

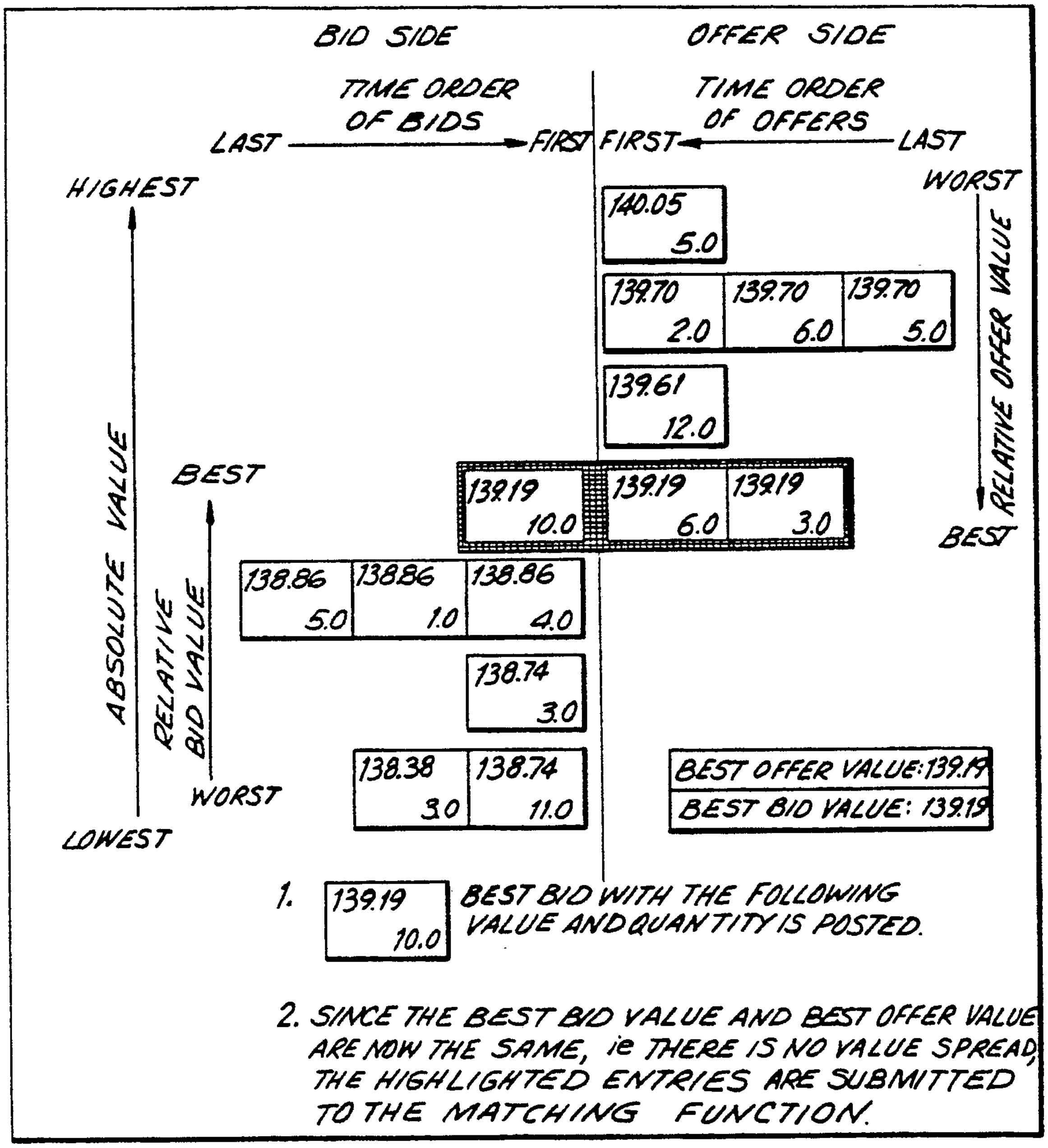

BID SIDE
OFFER SIDE
TIME ORDER OF BIDS
TIME ORDER OF OFFERS
LAST
FIRST
FIRST
LAST
HIGHEST
WORST
140.05 5.0
139.70 2.0
139.70 6.0
139.70 5.0
139.61 12.0
RELATIVE OFFER VALUE
ABSOLUTE VALUE
BEST
139.19 10.0
139.19 6.0
139.19 3.0
BEST
138.86 5.0
138.86 1.0
138.86 4.0
RELATIVE BID VALUE
138.74 3.0
138.38 3.0
138.74 11.0
WORST
LOWEST
BEST OFFER VALUE: 139.19
BEST BID VALUE: 139.19
1.
139.19 10.0
BEST BID WITH THE FOLLOWING VALUE AND QUANTITY IS POSTED.
2. SINCE THE BEST BID VALUE AND BEST OFFER VALUE ARE NOW THE SAME, ie THERE IS NO VALUE SPREAD, THE HIGHLIGHTED ENTRIES ARE SUBMITTED TO THE MATCHING FUNCTION.

FIG. 18

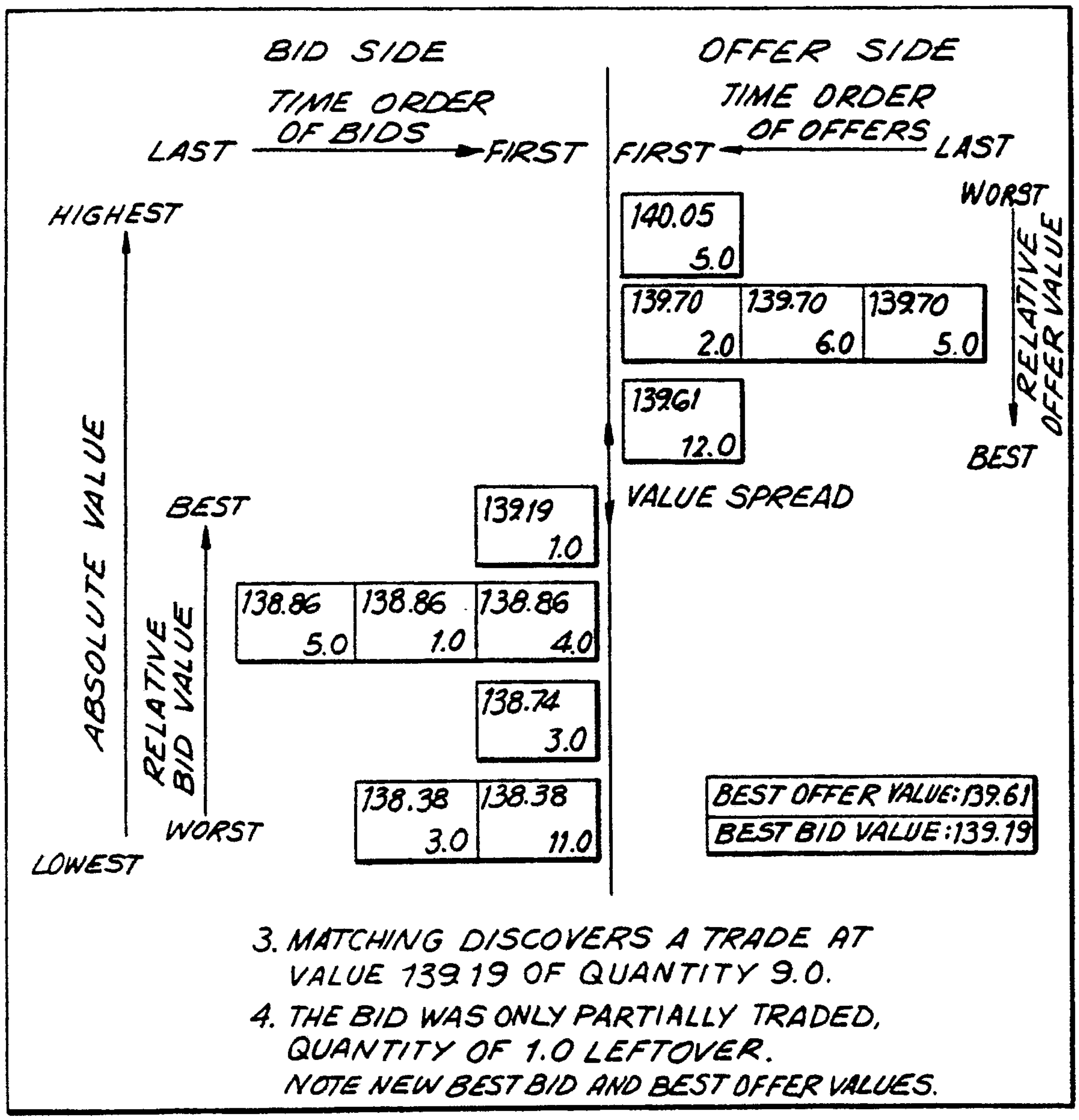
BID SIDE
OFFER SIDE
TIME ORDER OF BIDS
LAST
FIRST
TIME ORDER OF OFFERS
FIRST
LAST
HIGHEST
LOWEST
ABSOLUTE VALUE
BEST
WORST
RELATIVE BID VALUE
WORST
BEST
RELATIVE OFFER VALUE
140.05
5.0
139.70
2.0
139.70
6.0
139.70
5.0
139.61
12.0
VALUE SPREAD
139.19
1.0
138.86
5.0
138.86
1.0
138.86
4.0
138.74
3.0
138.38
3.0
138.38
11.0
BEST OFFER VALUE: 139.61
BEST BID VALUE: 139.19
3. MATCHING DISCOVERS A TRADE AT VALUE 139.19 OF QUANTITY 9.0.
4. THE BID WAS ONLY PARTIALLY TRADED, QUANTITY OF 1.0 LEFTOVER.
NOTE NEW BEST BID AND BEST OFFER VALUES.

FIG. 19

| TYPE | PRICE | B/S | DURATION | SIZE |
|---|---|---|---|---|
| HIT (YOURS) | SPECIFIED OR BETTER | SELL | FOK | PRIMARY ONLY |
| TAKE (MINE) | SPECIFIED OR BETTER | BUY | FOK | PRIMARY ONLY |
| BID | SPECIFIED OR BETTER | BUY | GTC | PRIMARY + MORE |
| OFFER | SPECIFIED OR BETTER | SELL | GTC | PRIMARY + MORE |

FIG. 20

| SUBSCRIBER NAME | CREDIT LIMIT | CREDIT REMAINING |
|---|---|---|
| BANK ORDISH | 50.0 | 22.5 |
| BANK QUARLES | 125.0 | 0.5 |
| ETC. | | |

FIG. 21

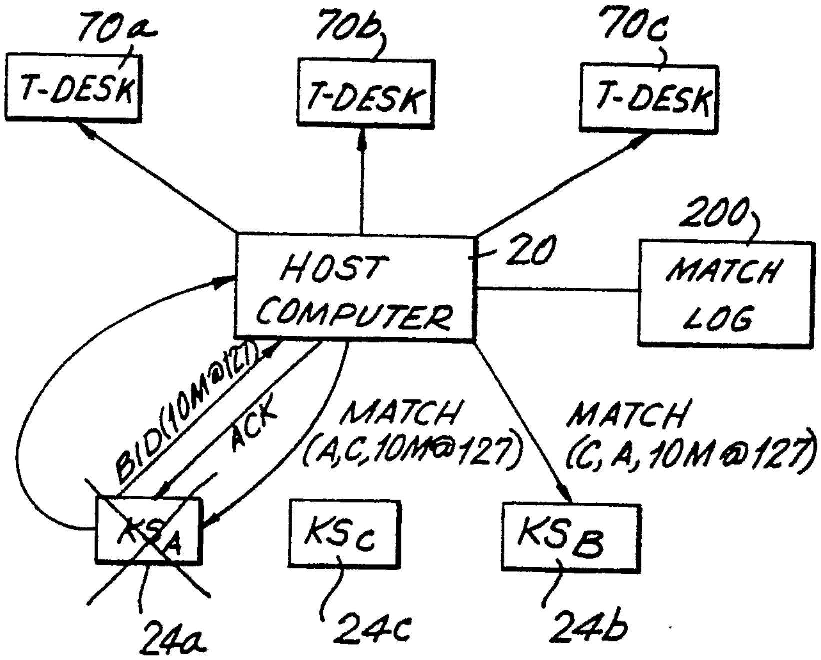
70a
T-DESK
70b
T-DESK
70c
T-DESK
200
MATCH LOG
HOST COMPUTER
20
BID(10M@127)
ACK
MATCH (A,C,10M@127)
MATCH (C,A,10M@127)
KSA
KSC
KSB
24a
24c
24b

FIG. 22

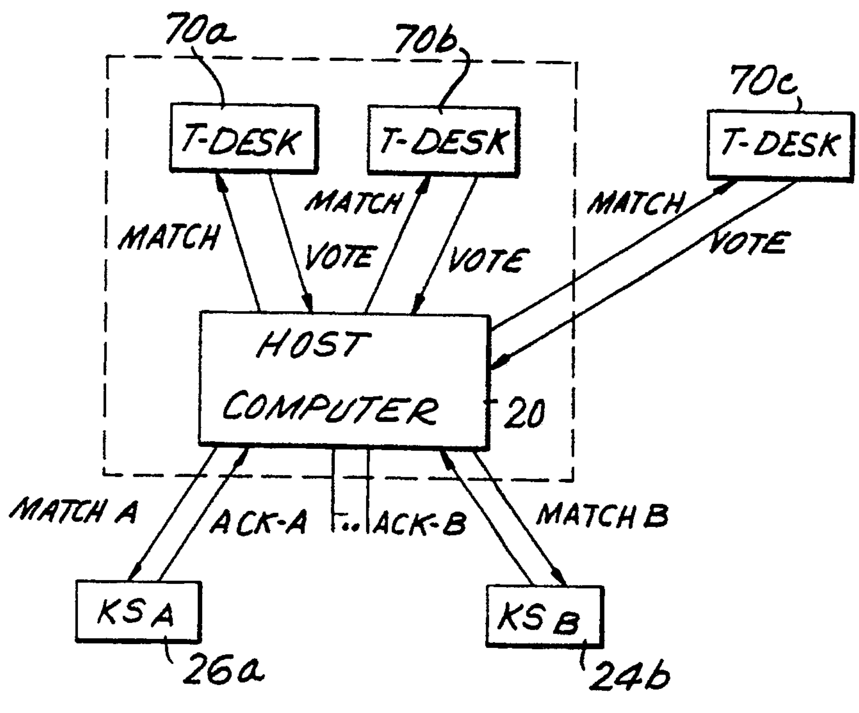
70a
70b
70c
T-DESK
T-DESK
T-DESK
MATCH
MATCH
VOTE
VOTE
MATCH
VOTE
HOST COMPUTER
20
MATCH A
ACK-A
ACK-B
MATCH B
KS A
KS B
26a
24b

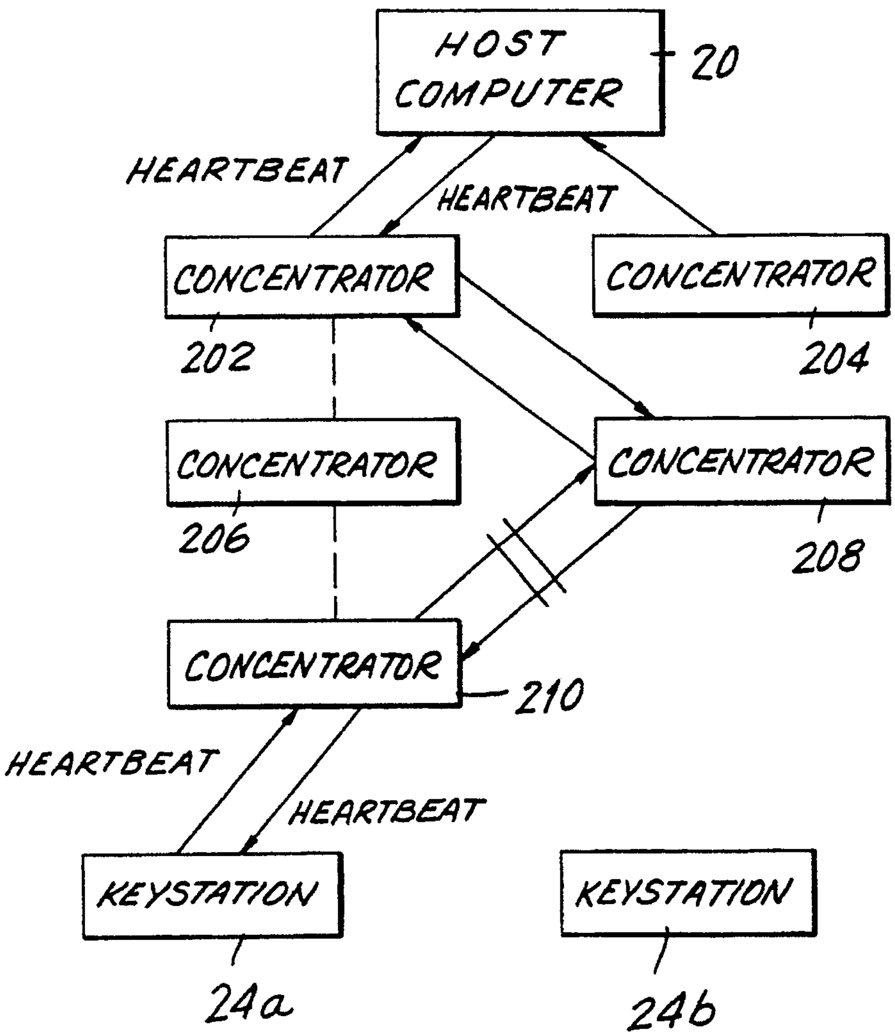
HOST COMPUTER
20
HEARTBEAT
HEARTBEAT
CONCENTRATOR
202
CONCENTRATOR
204
CONCENTRATOR
206
CONCENTRATOR
208
CONCENTRATOR
210
HEARTBEAT
HEARTBEAT
KEYSTATION
24a
KEYSTATION
24b

FIG. 23

| MATCH FIELD | SUB-FIELD | USE OR VALUES |
|---|---|---|
| XACT-TOKEN | | TRANSACTION SEQUENCE NUMBER |
| IxM-TOKEN | | INSTRUMENT/MARKET IDENTIFICATION |
| TRADE-TOKEN | | TRADE IDENTIFICATION[1] |
| MATCH-TOKEN | | MATCH IDENTIFICATION |
| QUOTE | | PRICE, YIELD, OR DISCOUNT |
| QUANTITY | | NUMBER OF "UNITS" TRADED |
| STATUS | | UNKNOWN, NON-BROKEN, SINGLY-BROKEN, DOUBLY-BROKEN |
| BUYER | | |
| | SUBSCRIBER-ID | IDENTIFIES SUBSCRIBER |
| | USER-ID | IDENTIFIES TRADER |
| | ENTRY-TOKEN | IDENTIFIES ENTRY |
| | NOTIFICATION-STATUS | UNKNOWN, FAILURE, SUCCESS |
| SELLER | | |
| | SUBSCRIBER-ID | IDENTIFIES SUBSCRIBER |
| | USER-ID | IDENTIFIES TRADER |
| | ENTRY-TOKEN | IDENTIFIES ENTRY |
| | NOTIFICATION-STATUS | UNKNOWN, FAILURE, SUCCESS |

FIG. 24

| CASE | MATCH STATUS | BUYER NOTIFICATION STATUS | SELLER NOTIFICATION STATUS |
|---|---|---|---|
| 1 | NON-BROKEN | SUCCESS | SUCCESS |
| 2 | SINGLY-BROKEN | FAILURE | SUCCESS |
| 3 | SINGLY-BROKEN | SUCCESS | FAILURE |
| 4 | SINGLY-BROKEN | UNKNOWN | SUCCESS |
| 5 | SINGLY-BROKEN | SUCCESS | UNKNOWN |
| 6 | DOUBLY-BROKEN | FAILURE | FAILURE |
| 7 | DOUBLY-BROKEN | UNKNOWN | FAILURE |
| 8 | DOUBLY-BROKEN | FAILURE | UNKNOWN |
| 9 | DOUBLY-BROKEN | UNKNOWN | UNKNOWN |

FIG. 25

| STEP | KEYSTATION | I/O SERVER | TRADING SERVER | TRADE ARBITER | TRANSACTION DESK |
|---|---|---|---|---|---|
| 0 | BID → | VALIDATE | | | |
| | CMD ACK'D ← | CMD ACK | | | |
| | | TRANSPORT → | POSITION | | |
| | ENTRY POS'D ← | TRANSPORT ← | MESSAGE (D) | | |
| | 1xM UPDATE ← | BROADCAST ← | MESSAGE (B) | | |
| 1 | OFFER → | VALIDATE | | | |
| | CMD ACK'D ← | CMD ACK | | | |
| | | TRANSPORT → | POSITION | | |
| | | | MATCH SET → | START TIMER | |
| | | | | BROADCAST → | REGISTER SET |
| | | | | | START TIMER |
| | | | | SUM (VOTES) ← | VOTE 1 |
| | | | COMMIT ← | CANCEL TIMER | |
| | ENTRY POS'D ← | TRANSPORT ← | MESSAGE (D) | | |
| | | START TIMER ← | NOTIFY (D) | | |
| | MATCH NOTIFY ← | TRANSPORT | | | |
| | ENTRY REM'D ← | TRANSPORT ← | MESSAGE (D) | | |
| | 1xM UPDATE ← | BROADCAST ← | MESSAGE (B) | | |
| 2 | MATCH ACK → | CANCEL TIMER | | | |
| | | TRANSPORT → | UPDATE LOG | | |
| | | | (ROUTE THRU) → | BROADCAST → | REGISTER ACK |
| | | | | | IF (ALL ACKED) |
| | | | | | CANCEL TIMER |
| | | | | | DE-REGISTER |
| 3 | (FAILURE) | EXPIRE TIMER | | | |
| | | MATCH NAK | | | |
| | | TRIGGER → | UPDATE LOG | | |
| | | | (ROUTE THRU) → | BROADCAST → | REGISTER NAK |
| | | | | | IF (ALL ACK/NAK) |
| | | | | | CANCEL TIMER |
| | | | | | DE-REGISTER |
| | | | | | DISPLAY ERROR |

FIG. 26

| TSN | SUBSCRIBER | X-TYPE | QUANTITY | RESTRICTION |
|---|---|---|---|---|
| 1 | A | BID | 15 | AON |
| 2 | B | OFFER | 10 | AON |
| 3 | B | BID | 10 | – |
| 4 | C | OFFER | 15 | – |

FIG. 27

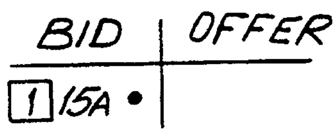


FIG. 28

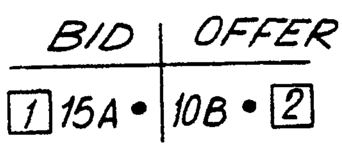


FIG. 29

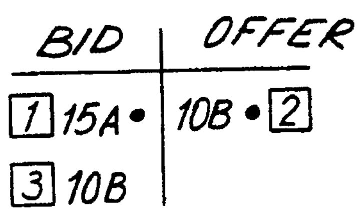


FIG. 30

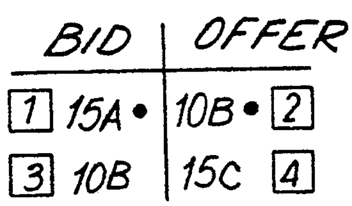


FIG. 31

| TO KS | NOTIFICATION | MATCH TYPE |
|---|---|---|
| A | B, 10 | BUY |
| A | C, 5 | SELL |
| B | A, 10 | SELL |
| B | C, 10 | BUY |
| C | A, 5 | SELL |
| C | B, 10 | SELL |

FIG.32

FIG.33

| TSN | FROM: KS | XACT-TYPE | QUALIFICATIONS |
|---|---|---|---|
| 5 | A | MATCH ACK | B, 10 |
| 6 | A | MATCH ACK | C, 5 |
| 7 | B | MATCH ACK | A, 10 |
| 8 | B | MATCH ACK | C, 10 |
| 9 | C | MATCH ACK | A, 5 |
| 10 | C | MATCH ACK | B, 10 |